**Europäisches Patentamt**

**European Patent Office**

**Office européen des brevets**

(19)

(11) Veröffentlichungsnummer: **0 084 579**
**B1**

(12) **EUROPÄISCHE PATENTSCHRIFT**

(45) Veröffentlichungstag der Patentschrift: **12.11.86**

(51) Int. Cl.⁴: **B 60 C 27/08**

(21) Anmeldenummer: **82100459.5**

(22) Anmeldetag: **23.01.82**

(54) Reifen- und Gleitschutzkette für gummibereifte Fahrzeuge, insbesondere schwere Erdbewegungsmaschinen.

| | |
|---|---|
| (43) Veröffentlichungstag der Anmeldung: **03.08.83 Patentblatt 83/31** | (73) Patentinhaber: **Asbeck, Heinz**<br>**Markusstrasse 38**<br>**D-4600 Dortmund-Hohensyburg (DE)** |
| (45) Bekanntmachung des Hinweises auf die Patenterteilung: **12.11.86 Patentblatt 86/46** | (72) Erfinder: **Asbeck, Heinz**<br>**Markusstrasse 38**<br>**D-4600 Dortmund-Hohensyburg (DE)** |
| (84) Benannte Vertragsstaaten: **AT BE CH DE FR GB IT LI LU NL SE** | (74) Vertreter: **Willert, Rolf et al**<br>**Patent- und Rechtsanwälte Dr.-Ing. Stuhlmann Dipl.-Ing. Willert Dr.-Ing. Oidtmann Dipl.-Ing. Bockermann Dipl.-Ing. Schneiders Bergstrasse 159**<br>**D-4630 Bochum 1 (DE)** |
| (56) Entgegenhaltungen:<br>**DE-A-1 817 170**<br>**DE-A-2 042 898**<br>**FR-A- 387 875**<br>**FR-A-2 148 435** | |

Courier Press, Leamington Spa, England.

EP 0 084 579 B1

## Beschreibung

Die Erfindung bezieht sich auf eine Reifen- und Gleitschutzkette für gummibereifte Fahrzeuge, insbesondere schwere und schnellfahrende Erdbewegungsmaschinen, nach dem Oberbegriff des Anspruchs 1.

Reifen- und Gleitschutzketten dieser oder ähnlicher Art kommen speziell zum Einsatz bei Radladern, Muldenkipper, Scrapern, Dumpern, Gradern (dies sind Fahrzeuge, die zum Planieren an Hängen und Böschungen eingesetzt werden), und sonstigen schweren Erdbewegungsfahrzeugen mit Gummibereifung. Diese Fahrzeuge fahren im Gelände bis zu 65 km/h schnell.

Es gibt verschiedenste Arten von Reifen- und Gleitschutzketten. Man kann die verschiedenen Typen von Gleitschutz-Ketten oder -Netzen unterteilen in solche mit geschweißten Teilen und solche ohne jegliche geschweißte Teile. Die schweißlos zusammengefügten Kettenelemente haben gegenüber geschweißten Kettenteilen den Vorteil geringerer Herstellungskosten, da sie ohne jegliche Schweißarbeit, die heute außerordentlich kostspielig ist, hergestellt werden können.

Bestimmte Typen von Ketten weisen jedoch den Mangel auf, daß sie aus einer relativ großen Anzahl unterschiedlich gestalteter Einzelteile zusammengesetzt werden müssen. Ziel ist es aber, im Hinblick auf neidrige Herstellungs- und Lagerhaltungskosten mit möglichst wenig Einzelteilen auszukommen.

Die DE—A—18 17 170 zeigt in Übereinstimmung mit dem Oberbegriff des Anspruchs 1 eine Reifen- und Gleitschutzkette aus schweißlosen Teilen. Allerdings sind bei dieser Kette sowohl die Reifenauflageplatte als auch die Laufplatte mit jeweils rechteckigem Grundriß so schmal, daß die Grundkörpern hochkant auf dem Reifen stehen. Die Haltebügel stehen etwa senkrecht zu der Ebene der Grundkörper. Auf Grund dieser Anordnung entsteht ein seitlich schräger Laufflächenverschleiß, der zu schnellem Verschleiß der Kette führt. Bei jeder Radumdrehung tritt eine sehr hohe Kippbeanspruchung auf, da sich die Grundkörper nicht kippstabil abstützen können.

Auf Grund des Abkippens der Grundkörper tritt ein starker einseitig schräger Laufflächenverschleiß auf. Somit ist nur eine begrenzte Ausnutzung des Laufflächen - Verschleißvolumens möglich. Die durch den einseitigen Verschleiß entstehende scharfe Kante an der Lauffläche verhindert auch ein weiterverwenden der Kette durch Wenden der Kette nach Erreichen eines bestimmten Verschleißgrades.

Der Erfindung liegt die Aufgabe zugrunde, eine Reifen- und Gleitschutzkette der im Oberbegriff des Anspruchs 1 angegebenen Art derart weiterzubilden, daß die Lebensdauer der Kette erhöht wird, indem sichergestellt wird, daß die Grundkörper kippstabil auf der Reifenoberfläche stehen.

Diese Aufgabe wird durch die im Anspruch 1 angegebenen Erfindung gelöst.

Bei den bekannten Ketten ist auf Grund vorzeitigen Verschleißes des Kettennetzes ein häufiges Nachspannen erforderlich. Das Nachspannen kann jedoch nur in begrenztem Umfang erfolgen, wobei in Kauf zu nehmen ist, daß durch häufiges Nachspannen der ursprünglich vorgesehene Sitz des Kettennetzes auf dem Reifen verändert wird, und zwar dahingehend, daß sich der ursprüngliche spitze Winkel bezüglich der Laufrichtung nach und nach erweitert, mit der Folge, daß sich einzelne Kettenteile immer mehr senkrecht zur Laufrichtung einstellen. Hierdruch tritt eine weitere Erhöhung der Beanspruchung und mithin ein stärkerer Verschleiß ein.

Im Gegensatz zu den oben erläuterten, bekannten Ketten ergibt sich durch die erfindungsgemäße Konstruktion der Vorteil, daß trotz gegebenenfalls erforderlichem Nachspannen auch bei fortgeschrittenem Verschleiß eine Änderung der Winkelstellung der Grundkörper bezüglich der Laufrichtung nicht erfolgen kann. Die Grundkörper weisen eine ausreichend breite und flächige Abstützung auf der Reifenoberfläche auf, so daß Kippbewegungen weitgehend vermieden werden und der Abrieb relativ horizontal juf der dem Boden zugewandten Profilkörperlauffläche erfolgt, und nicht schräg einseitig.

Die Kette nach der Erfindung läßt sich als stoßloses Kettenlaufnetz ausbilden, d.h., als Endloskette ohne Montagenähte im Kettenlaufnetz und in den beiden Reifenseitenschutz- und Stoßfangernetzen. Eine spezielle Fertigung und Lagerhaltung besonderer Endglieder, Verschluß- und Reparturteile ist nicht erforderlich.

Die Kette läßt sich im Baukastenprinzip herstellen, bei der Montage werden weder Schweißautomaten noch Bearbeitungs- oder Montagemaschinen benötigt. Sämtliche Kettenausführungen können nicht nur im Herstellerwerk, sondern auch bei den Baumaschinenhändlern oder in der Werkstatt des Verbrauchers schnell und einfach ohne Hilfsmittel von Hand zu gewünschten Kettengrößen und Laufnetz-Maschenformen zusammenmontiert werden.

Bie der erfindungsgemäßen Kette handelt es sich um vorzugsweise gesenkgeschmiedete, systemgleiche Stahlteile, die später keinermechanische Bearbeitung mehr bedürfen.

Durch die Weiterbildung nach Anspruch 2 wird erreicht, daß die Grundkörper im montierten Zustand diagonal zur Laufrichtung liegen, wobei die etwa quadratische Ausbildung der Grundkörper bewirkt, daß sich dessen Seitenkanten zu den Seitenkanten eines benachbarten Grundkörpers etwa parallel erstrecken, d.h.: ein Grundkörper steht mit vier anderen Grundkörpern über die Haltebügel und Verbindungsbügel in Verbindung.

Die im Patentanspruch 6 angegebene Maßnahme ermöglicht nicht nur einen leichten und unkomplizierten Zusammenbau der Kette durch angelernte Arbeitskräfte ohne Einsatz besonderer Hilfsmittel, sondern es wird außerdem eine völlig mühelose und schnelle Repartur der Kette am Reifen ermöglicht, ohne daß eine Demontage der Kette stattfinden muß.

Gegenüber der im Patentanspruch 3 angegebenen Ausgestaltung der Rastnasen an der Verbindungsbügeln (also der senkrechten Anordnung der Rastnasen) schlägt der Patentanspruch 4 vor, die Rastnasen so vorzusehen, daß sie in der Ebene der Verbindungsbügel liegen. Vorzugsweise sind die Rastnasen als Winkelhaken ausgebildet, die beispielsweise in die Richtung weisen, in der die Verbindungsbügel in den Grundkörper eingeschoben werden. Durch diese zuletzt angegebene Ausgestaltung der Rastnaser wird gegenüber den senkrecht angeordneten Rastnasen der Vorteil erreicht, daß die Gesamt-Bauhöhe der Grundkörper herabgesetzt werden kann; denn man spart grundsätzlich denjenigen Platz ein, den die Rastnasen dann benötigen, wenn sie senkrecht aus der Ebene der Verbindungsbügel vorspringen. Durch die in der Ebene der Verbindungsbügel liegenden Rastnasen wird nicht nur eine flachere Bauart und damit verbunden eine bessere Anpassung an die Reifenoberfläche erzielt, sondern man erzielt weiterhin den Vorteil, daß das Gewicht der Gesamtkette geringer ist, weil Material eingespart werden kann.

Eine besondere Bedeutung hat in gewisser Weise die im Patentanspruch 5 näher erläuterte Sperrnase an den einzelnen Verbindungsbügeln, welche gewährleistet, daß die Verbindungsbügel sich nicht oder nur kaum in den Führungen verschieben können, so daß trotz des relativ einfach durchzuführenden Zusammenbaus der Kette sicher gewährleistet ist, daß die Verbindungsbügel sich nicht aus den Grundkörpern lösen. Für dieses Merkmal der Selbstverriegelung wird selbständiger Schutz geltend gemacht.

Durch die spezielle Abstimmung von Sperrnase und Haltevorsprüngen gemäß Patentanspruch 6 wird gewährleistet, daß selost nach längerem Gebrauch und entsprechendem Verschleiß im Bereich der Sperrnase dennoch ein sicherer Sitz der Verbindungsbügel in den Grundkörper erfolgt. Bei Reifenschutzketten mit schmalen, senkrecht auf der Reifenoberfläche stehenden Kettengliedern muß nach einiger Betriebszeit die Kette nachgespannt werden, weil diese Kettenglieder dann zu stakr kippen.

Wenn das Laufnetz der Kette teilweise, insbesondere an extrem beanspruchten Stellen verschlissen ist, so braucht nicht die gesamte Kette erneuert zu werden. Es besteht aufgrund des "Baukastensystems" der erfindungsgemäßen Kette die Möglichkeit, lediglich Teile der Kette auszutauschen, so daß eine teilweise erneuerte, aber gleichwohl voll betriebsfähige Kette erhalten wird. Ein besonders geringer Verschleiß von Haltebügeln und Verbindungsbügeln wird durch die in dem Patentanspruch 9 angegebene Maßnahme erzielt. Die miteinander in Eingriff befindlichen Teile rutschen nicht aufeinander, was mit relativ hohem Verschleiß verbunden wäre, sondern die Teile rollen aufeinander ab, so daß die Eingriffsflächen auch bei hoher Belastung nur geringem Verschleiß ausgesetzt sind.

Durch die gemäß Patentanspruch 10, an den Haltebügeln und Verbindungsbügel vorgesehenen Verschleißverdickungen kann eine hohe Lebenserwartung der erfindungsgemäßen Ketten erzielt werden. Selbst nach erheblichem Verschleiß der Bügel kann die Kette noch wirksam zum Reifen- und Gleitschutz eingesetzt werden.

Die in Anspruch 11 angegebene Maßnahme, wenigstens einen Teil der Laufplatten und/oder Reifenauflageplatten mit einem Profil zu versehen, hat den Zweck, einmal ein Verschleißvolumen auf der Laufplatte zu schaffen, welches eine relativ lange Lebensdauer der Kette gewährleistet, und darüber hinaus eine gute Traktion zu gewährleisten.

Gemäß Patentanspruch 12 kann das jeweilige Profil als Profilkörper mit V-förmigen, rechteckigem oder kreisförmigem Querschnitt ausgebildet sein. Diese Profilkörper können auf einem Grundkörper mehrfach, dann selbstverständlich in entsprechend kleiner Ausführung vorgesehen sein, die Profilkörper können aber auch relativ groß ausgebildet sein, so daß ein Profilkörper pro Grundkörper vorgesehen ist, beziehungsweise zwei Profilkörper pro Grundkörper, wenn sowohl die Laufplatte als auch die Reifenauflageplatte mit einem Profil ausgestattet sind. Besonders zu bevorzugen sind Profilkörper mit vierzacksternförmigem Grundriß, wobei jeweils zwei Zacken längs und zwei Zacken quer zur Laufrichtung weisen. Hierdurch wird ein gutes Greifen der Kette im Boden gewährleistet. Unter "vierzacksternförmigem Grundriß" soll hier ein solcher Grundriß verstanden werden, den man ausgehend von einem quadratischen Grundriß dadurch erhält, daß die Seiten des Quadrats nach innen durchgebogen oder eingeknickt sind.

Gemäß Patentanspruch 14, dienen auf der Reifenauflageplatte vorgesehene Noppen oder Streifen zur Erhöhung des Reibschlusses zwischen der Kette und der Reifenoberfläche. Die Noppen oder Streifen können aus Kunststoff bestehen, vorzugsweise bestehen sie aus auf die Reifenauflageplatte aufvulkanisiertem Gummi. Durch Gumminoppen wird ein praktisch rutschfestes Aufliegen der Grundkörper auf dem Reifen ermöglicht.

Was die Verbindung zwischen der Grundkörpern und den Profilkörpern angeht, so bieten sich erfindungsgemäß verschiedene Möglichkeiten. Gemäß Patentanspruch 15 sind die Profilkörper auf die Grundkörper aufgeschmiedet. Die Profilkörper können also in einem Arbeitsgang zusammen mit den Grundkörpern gebildet werden. Ein Lösen der Profilkörper von dem Grundkörper ist unmöglich.

Erfahrungsgemäß ist davon auszugehen, daß der direkte Bodenkontaktbereich im Laufnetz einer Kette schneller verschleißt als alle anderen Bereiche des Laufnetzes. Bei der erfindungsgemäßen Kette bestehen je nach Ausbildung der Grundkörper mehrere besonders kostengünstige Möglichkeiten der Lauflächenerneuerung. Diese ist zunächst durch die zerstörungsfreie Auswechslung von Grundkörpern gegeben. Eine solche Laufnetzerneurung würde maximal 40% des Neupreises einer Kette ausmachen. Eine besonders kostengünstige Laufnetzerneuerung ist jedoch dann gegeben, wenn das Laufnetz Grundkörper besitzt, die mit auswechselbaren Laufprofilgen ausgerüstet sind. In einem solchen Fall sind schnell und leicht die Laufprofile auszuwechseln. Eine solche Laufnetzerneuerung würde nur circa 20% des Neupreises einer Kette kosten. Demgemäß sieht der Patentanspruch 16 vor, die auf der Laufplatte der Grundkörper vorgesehenen Laufprofilkörper lösbar mit den Grundkörper zu verbinden.

Neben der grundsätzlichen Möglichkeit, die Laufprofile auszuwechseln, bietet eine solche Kette den Vorteil, die Laufprofile—auch wenn diese noch nicht unbrauchbar sind—für eine spezielle Einsatzart und einen speziellen Einsatzort auszuwechseln.

Die gemäß Patentanspruch 17 vorgesehenen gesenkgeschmiedeten Stahlteile eignen sich besonders als Laufprofilkörper beim Einsatz fu hartem Gestein, beispielsweise in Steinbrüchen. Verschleißfreie Kunststoffteile eignen sich für weichere Böden oder den Einsatz bei Schnee und Eis. Auch die spezielle Form der Laufprofilkörper kann den jeweiligen Bedürfnissen angepaßt werden.

Die lösbaren Laufprofilkörper können auf unterschiedliche Weise an den Grundkörpern befestigt werden. Die gemäß Patentanspruch 18 vorgesehenen Haltezapfen lassen sich einfach in die Öffnung des Grundkörpers einschieben. Dies ist insbesondere bei der Ausbildung gemäß Patentanspruch 19 leicht möglich, und das anschließend erfolgende Festmachen des Haltezapfens mittels des Federrings gestattet est, innerhalb kürzer Zeit auch eine relativ große Kette mit den gewünschten Laufprofilkörpern auszustatten.

Gemäß Patentanspruch 21 bietet es sich an, die erfindungsgemäße Kette als sogenannte "Wendekette" auszubilden, das heißt, auf beiden Seiten der Grundkörper sind Profile mit im wesentlichen gleicher Profilhöhe, vorzugsweise Profile mit gleichförmig ausgestalteten Profilkörpern vorgesehen. Wenn die eine Seite der Grundkörper verschlissen ist, läßt sich die Kette wenden, so daß donn noch die zuvor auf der Reifenoberfläche aufgelegenen Profilkörper als nunmehr am Boden angreifende Verschleißstücke zur Verfügung stehen. Durch diese Maßnahme läßt sich eine extrem hohe Lebensdauer der Kette erzielen. Die in den Patentansprüchen 23 bis 25 angegebenen Bemessungsgrößen haben sich besonders bei Reifen mit Durchmessern von bis 3,5 m als vorteilhaft erwiesen.

Sowohl bei der Montage und bei Reparaturen als auch im Einsatz werden die Grundkörper mehr oder weniger gegeneinander verdreht oder verschwenkt. Die in den Ansprüchen 26 und 27 angegebene Verschwenkbarkeit der Grundkörper zueinander gewährleistet, daß einmal die Möglichkeit besteht. Netzverbunde gemäß Patentanspruch 28 zu bilden, zum anderen sich die Kette im Einsatz den Walkbewegungen des Reifens gut anpassen kann.

Gemäß Patentanspruch 29 lassen sich die beiden Enden einer Kette gleichsam nahtlos und ohne zusätzliche Einzelteile zu einer Endloskette zusammenfügen. Dies hat nich nur Verteile bezüglich der Lagerhaltung, bedingt durch die wenigen unterschiedlichen Einzelteile der Kette, sondern die Kette bildet auch einen gleichmäßigen und homogenen Verbund unter Vermeidung von dem Verschleiß besonders ausgesetzten Schwachstellen.

Im folgenden wird die Erfindung anhand von Ausführungsbeispielen näher erläutert. Es zeigen:

Fig. 1 bis 3 jeweils eine Draufsicht auf einen Ausschnitt einer Reifen- und Gleitschutzkette,

Fig. 4 etwa maßstabsgetreu eine Seitenansicht eines Grundkörpers für eine Kette gemäß Fig. 1, 2 oder 3,

Fig. 5 eine Schnittansicht des Grundkörpers gemäß Fig. 4 entlang der Linie V—V,

Fig. 6 eine Schnittansicht des Grundkörpers gemäß Fig. 4 gemäß der Schnittlinie VI—VI,

Fig. 7 eine Draufsicht auf einen Verbindungsbügel, wie er in der Kette gemäß Fig. 1, 2 oder 3 verwendet wird,

Fig. 8 eine Seitenansicht des Verbindungsbügels gemäß Fig. 7,

Fig. 9 und 11 jeweils eine Draufsicht auf andere Ausführungsformen von Verbindungsbügeln,

Fig. 10 und 12 jeweils eine Seitenansicht auf der Verbindungsbügel gemäß den Fig. 9 beziehungsweise 11,

Fig. 13 eine Seitenansicht eines Grundkörpers mit zwei eingesetzten Verbindungsbügeln,

Fig. 14 eine Schnittansicht des Grundkörpers gemäß Fig. 13 gemäß der Schnittlinie XIV—XIV,

Fig. 15 eine Draufsicht auf den Kattenanfang und das Kettenende einer zu einer Endloskette zusammenzufügenden Kette,

Fig. 16 eine Schnittansicht ähnliche wie Fig. 14, jedoch einer anderen Ausführungsform der Erfindung,

Fig. 17 eine Seitenansicht eines Grundkörpers mit daran angebrachtem benachbarten und verschwenkten Grundkörper,

Fig. 18 eine Draufsicht auf einen Grundkörper mit einem daran befestigten Grundkörper, der in der Ebene der Grundkörper verschwenkt ist,

Fig. 19 eine Schnittansicht eines Grundkörpers mit lediglich einem Haltebügel, jedoch drei eingesetzten Verbindungsbügeln,

Fig. 20 eine Seitenansicht eines weiteren Ausführungsbeispiels eines Grundkörpers,

Fig. 21 eine Schnittansicht des Grundkörpers gemäß Fig. 20 gemäß der Schnittlinie XXI—XXI,

Fig. 22 eine Seitenansicht eines anderen Ausführungsbeispiels eines Grundkörpers,

Fig. 23 eine Draufsicht auf den Grundkörper gemäß Fig. 22,

Fig. 24 eine Seitenansicht eines Grundkörpers mit V-förmigem Profil auf der Laufplatte,

Fig. 25 eine Draufsicht auf den Grundkörper gemäß Fig. 24,

Fig. 26 eine Draufsicht auf eine andere Ausführungsform eines Grundkörpers,

Fig. 27 eine Seitenansicht eines anderen Ausführungsbeispiels eines Grundkörpers,

Fig. 28 eine Draufsicht auf den in Fig. 27 dargestellten Grundkörper,

Fig. 29 eine Draufsicht auf ein anderes Ausführungsbeispiel eines Grundkörpers mit kreisförmigem Profilkörper,

Fig. 30 eine Draufsicht auf ein weiteres Ausführungsbeispiel eines Grundkörpers mit mehreren Profilkörpern,

Fig. 31 eine Seitenansicht auf einen Grundkörper mit Profilkörper, welcher eine vierzacksternförmigen Grundriß aufweist,

Fig. 32 eine Draufsicht auf den Grundkörper gemäß Fig. 31,

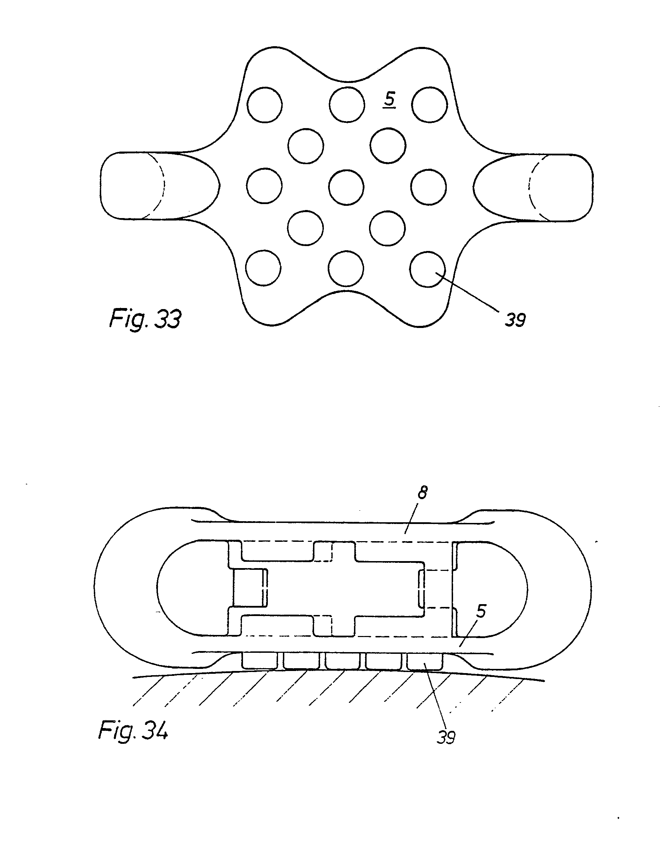

Fig. 33 eine Ansicht von unten einer weiteren Ausführungsform eines Grundkörpers,

Fig. 34 eine Seitenansicht des Grundkörpers gemäß Fig. 33,

Fig. 35 eine Seitenansicht eines Grundkörpers mit lösbar befestigtem Laufprofilkörper,

Fig. 36 eine Draufsicht auf den Grundkörper gemäß Fig. 35,

Fig. 37 eine Seitenansicht eines Grundkörpers mit darauf festgeschraubtem Laufprofilkörper,

Fig. 38 eine Draufsicht auf den Grundkörper gemäß Fig. 37,

Fig. 39 eine Seitenansicht eines weiteren Ausführungsbeispiels eines Verbindungsbügels,

Fig. 40 eine Draufsicht auf den Verbindungsbügel gemäß Fig. 39, und

Fig. 41 die Draufsicht auf den Rand des Laufnetzes einer Reifen- und Gleitschutzkette mit an dem Rand angebrachten Seitennetzteil.

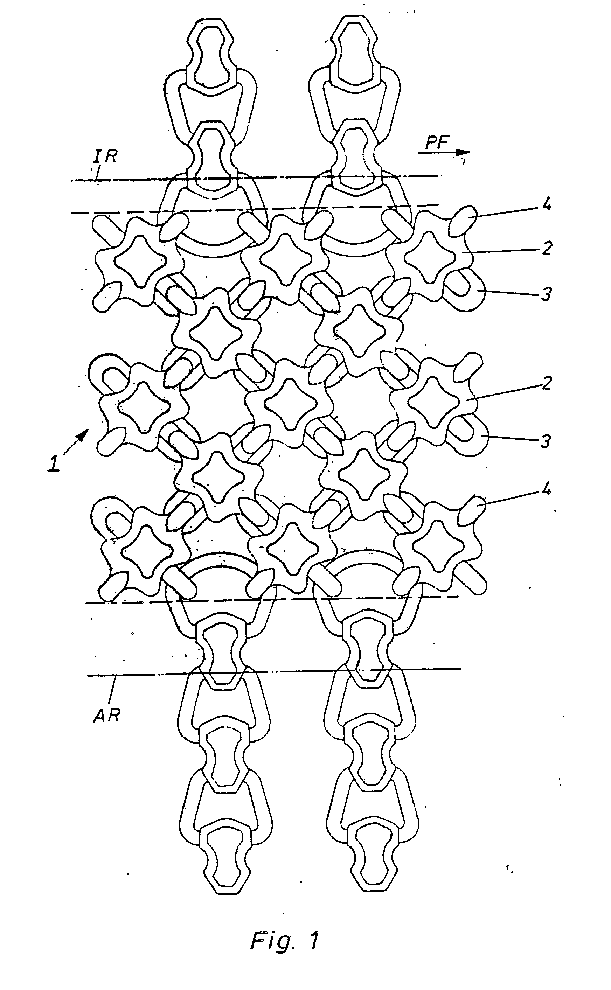

Die in Fig. 1 im Ausschnitt dargestellte Reifen- und Gleitschutzkette 1 besitzt im Bereich ihres Laufnetzes, also zwischen den beiden mittleren gestrichelten Linien, mehrere, gleichförmig ausgebildete Grundkörper 2, die über Verbindungsbügel 3, welche an Haltebügeln 4 der Grundkörper 2 angreifen, zu einem Verbund zusammengesetzt sind. In Fig. 1 sind weiterhin der innere Rand IR und der äußere Rand AR der Lauffläche des Reifens durch strichpunktierte Linien angedeutet. Auf beiden Seiten des Laufnetzes der Kette 1 schließen sich als Radialketten ausgebildete Stoßfänger in den Seitennetzen an. Man erkennt aus der Zeichnung, daß im Bereich der inneren Reifenkante das Laufnetz etwas zur Reifenmitte zurücksteht, während im Bereich der äußeren Reifenkannte des Laufnetz ein größeres Stück zur Mitte hin zurücksteht. Dieses deshalb, weil bei eintretendem Lochlaibungsverschleiß im Laufnetz mittels der außenseitig angebrachten Ferderspannvorrichtung die Kette so nachgespannt werden kann, daß das laufnetz nicht über die Reifenseitenkanten ninausragen kann.

Die vorliegende Erfindung betrifft speziell die Ausgestaltung der im Bereich des Laufnetzes der Reifen- und Gleitschutzkette 1 vorgesehenen Grundkörper 2 sowie der Verbindungsbügel.

In Fig. 1 ist die Laufrichtung des Reifens durch einen Pfeil PF kenntlich gemacht, und man sieht, daß die Grundkörper 2, die im wesentlichen einen quadratischen Grundriß aufweisen, derart orientiert sind, daß ihre Diagonalen parallel beziehungsweise senkrecht zur Laufrichtung liegen.

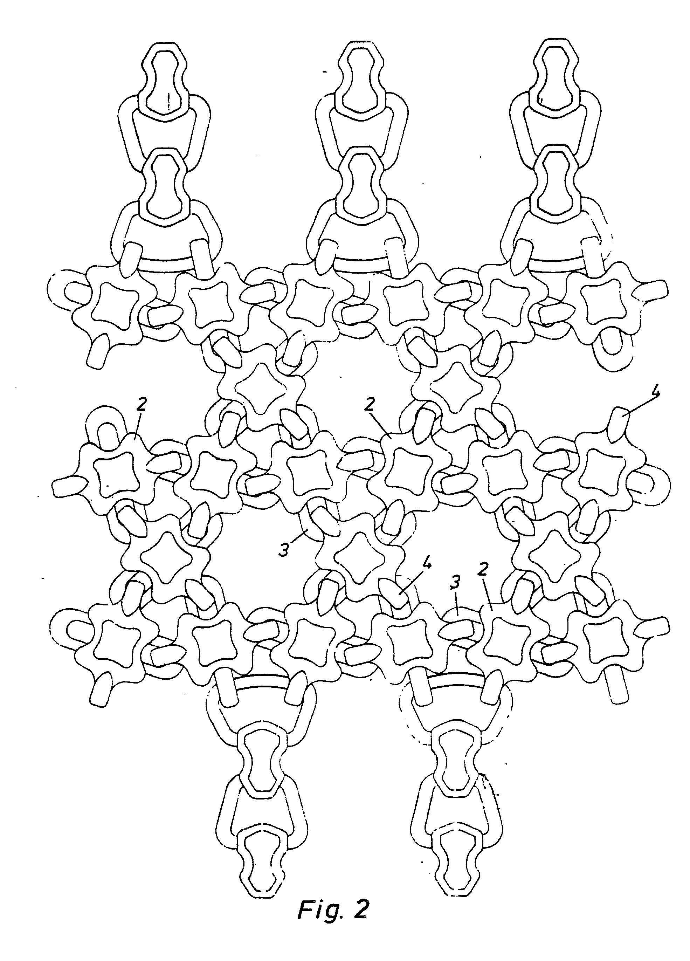

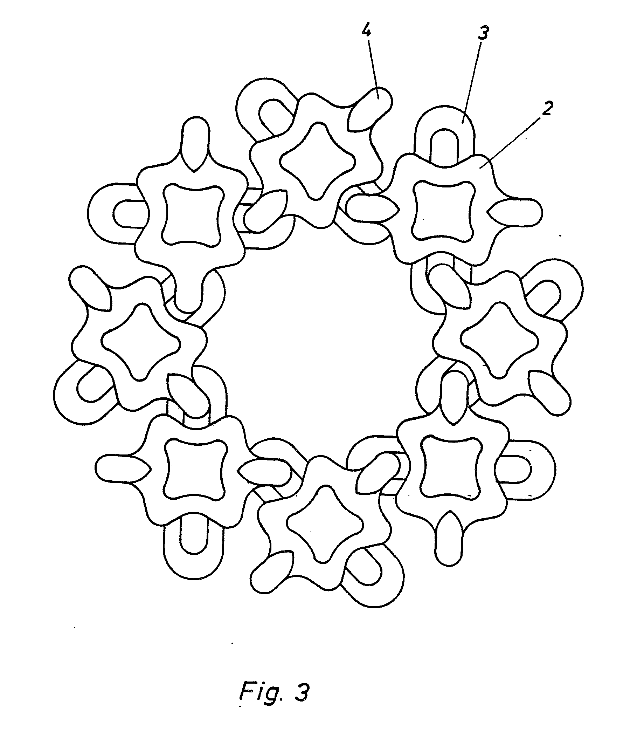

Gemäß Fig. 1 bilden jeweils vier Grundkörper einen Verbund, und zwar derart, daß die Seitenkanten jedes Grundkörpers zu der jeweils benachbarten Seitenkante des benachbarten Grundkörpers im wesentlichen parallel verläuft. Im Gegensatz dazu zeigt Fig. 2 eine alternative Anordnung, gemäß der beispielsweise sechs oder drei Grundkörper zu einem Verbund zusammengefaßt sind. Bei dieser Anordnung liegen die Seitenkanten der Grundkörper nicht mehr zueinander parallel, sondern weisen unterschiedliche Winkel auf Eine solche Änderung der Grundkörper - Kettennetzanordnung ist vorzugsweise für den Einsatz als Traktionskette geeignet. Sie gewährleistet jedoch ebenfalls einen erheblichen Reifenschutz.

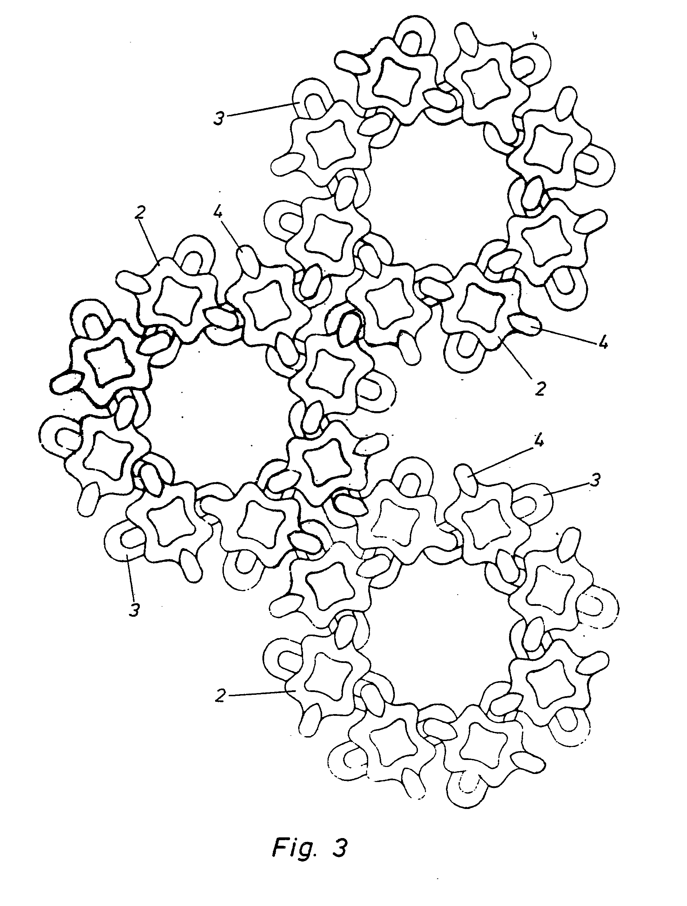

Fig. 3 zeigt jeweils acht Grundkörper als Verbund. Diese Kettenmaschenform ist vorzugsweise auf Erdbewegungsmaschinen und Forstfahrzeugen als reine Gelände - Gleitschutzkette sowie als Schnee- und Eis - Anti - Rutschkette für schwere, schnellaufende Lastwagen und Hinterkipper mit Einfach- und Zwillingsbereifung und für den Einsatz in morastigen, schlammigen Geländeverhältnissen einsetzbar. Wie im folgenden beschrieben werden wird, liegen bei allen Netzmaschenformen die einzelnen Grundkörper 2 satt auf der Reifenoberfläche auf. Diese flache Auflage ist auch dann gewährleistet, wenn die Grundkörper relativ unregelmäßig angeordnet sind, beispielsweise so, wie es in Fig. 2 dargestellt ist.

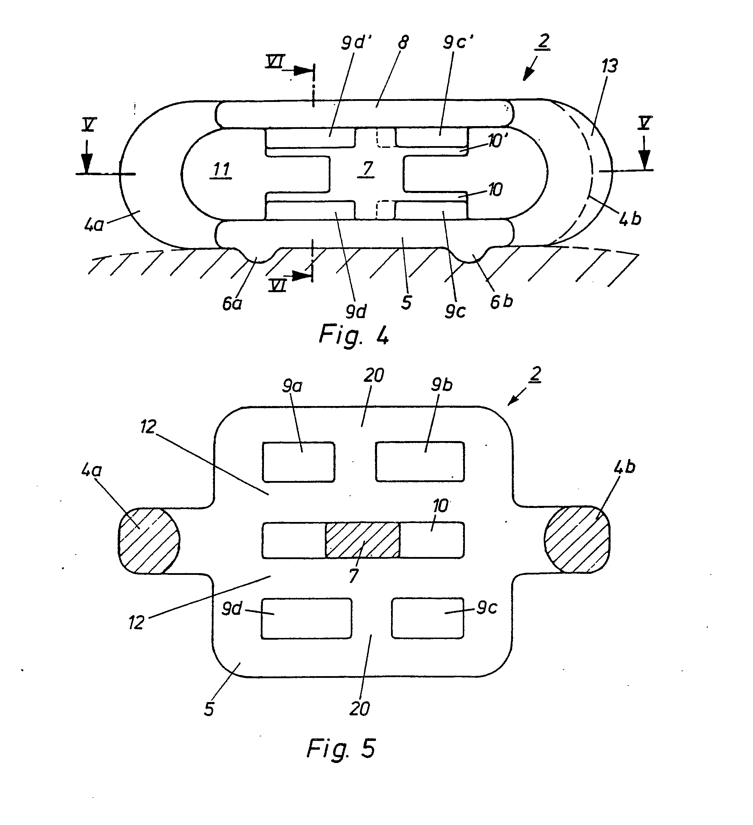

Gemäß der Darstellung in den Fig. 4 bis 6 besitzt der Grundkörper 2 eine Reifenauflageplatte 2 mit zwei Wulsten 6a und 6b, die ein Rutschen auf der Reifenoberfläche verhindern. Der Reifen ist in Fig. 4 gestrichelt angedeutet. Über die Haltebügel 4a und 4b, die jeweils im Mittelbereich der beiden gegenüberliegenden Seitenkanten der Reifenauflageplatte 5 ansetzen, sowie über einen Steg 7, ist die Reifenauflageplatte 5 mit einer zu dieser parallel angeordneten Laufplatte 8 verbunden.

Wie man besonders gut aus Fig. 5 ersieht, ragen in den durch die Reifenauflageplatte 5 und die Laufplatte 8 gebildeten Zwischenraum 11 Haltevorsprünge 9a bis 9d von der Innenseite der Reifenauflageplatte 5. Diese Haltevorsprüngen 9a bis 9d stehen sich von der Innenseite der Laufplatte 8 aus erstreckende Haltevorsprünge 9a' bis 9b' gegenüber, so daß die Haltevorsprünge 9a und 9a', 9b und 9b' ... jeweils Haltevorsprungspaare bilden.

Der Steg 7 ist jeweils in Richtung auf den Haltebügel 4a beziehungsweise 4b im Bereich jeder Platte 5 und 8 erweitert, so daß ein Anschlag 10 gebildet wird. Dieser Anschlag 10 auf der Reifenauflageplatte 5 beziehungsweise 10' an der Laufplatte 8 bildet zusammen mit den Haltevorsprüngen Führungen 12 und 12'.

Wie aus der Zeichnung ersichtlich, bilden die Haltebügel 4a, 4b ösenförmige Gebilde, die in U-förmige, schäkelartige Verbindungsbügel eingreifen, deren Enden mit Rastnasen versehen sind, welche in den Führungen 12 beziehungsweise 12' eines benachbarten Grundkörpers sitzen. Die Haltebügel 4a und 4b besitzen Verschleißverdickungen 13, von denen eine in Fig. 3 gestrichelt angedeutet ist.

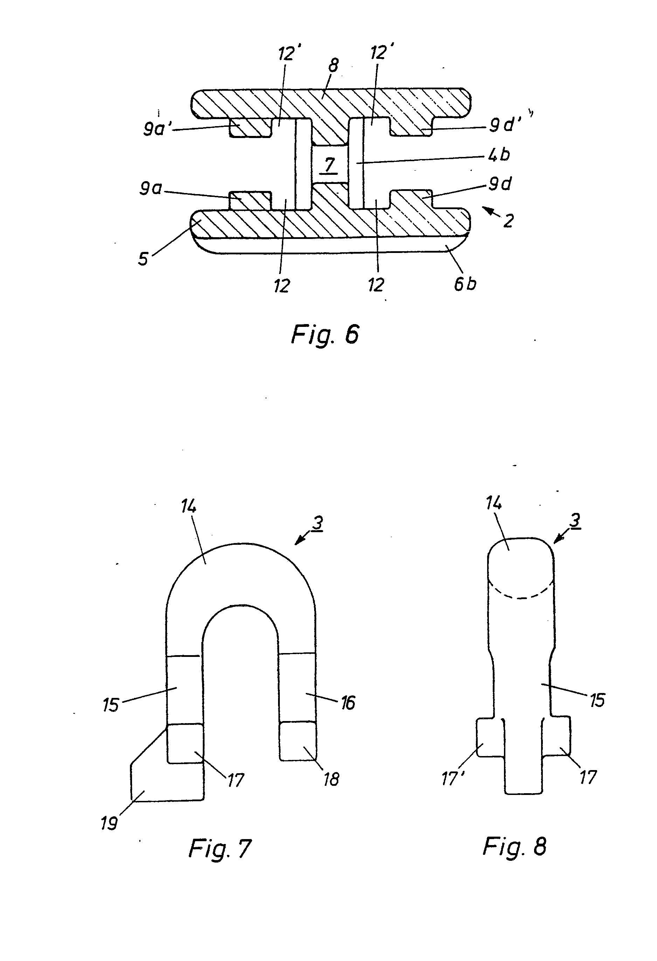

Die Fig. 7 und 8 zeigen einen Verbindungsbügel 3 mit einem Verbindungssteg 14 und zwei daran anschließenden Schenkeln 15 und 16. Am Ende des Schenkels 15 sind zwei Rastnasen 17 und 17' ausgebildet, am Ende des Schenkels 16 sind zwei Rastnasen 18 und 18' ausgebildet. Die Rastnasen sind in Längsrichtung der Schenkel so dimensioniert, daß sie in den Führungen 12 beziehungsweise 12' it Spiel Platz haben. Die Dicke der Schenkel ist so bemessen, daß sie zwischen zwei gegenüberliegenden Haltevorsprüngen, beispielsweise zwischen den Haltevorsprüngen 9a und 9a' (Fig. 6), hindurchgeführt werden können. Die Dicke der Rastnasen ist so bemessen, daß die Rastnasen den Raum in den Führungen 12 im wesentlichen ausfüllen. Ebenso wie die Haltebügel 4a, 4b weist auch der Verbindungssteg 14 eine Verschleißverdickung auf, die aus Fig. 7 ersichtlich ist.

Die Breite der Rastnasen in Querrichtung der Schenkel 15 und 16 ist so bemessen, daß die Rastnasen ohne Schwierigkeiten neben den Haltevorsprüngen, zum Beispiel neben den Haltevorsprüngen 9a und 9c (Fig. 5), sowie durch die Durchlässe 20 zwischen zwei benachbarten Haltevorsprüngen, zum Beispiel durch den Durchlaß 20 zwischen den Haltevorsprüngen 9c und 9d in die dort benachbarte Führung 12 geführt werden können.

Der Schenkel 15 des Verbindungsbügels 3 besitzt an seinem Ende eine Sperrnase 19, deren Breite so bemessen ist, daß sie zwischen den gegenüberliegenden Anschlägen 10 und 10' Platz hat, und die den Schenkel 15 entsprechend der Breite eines Anschlags 10 verlängert.

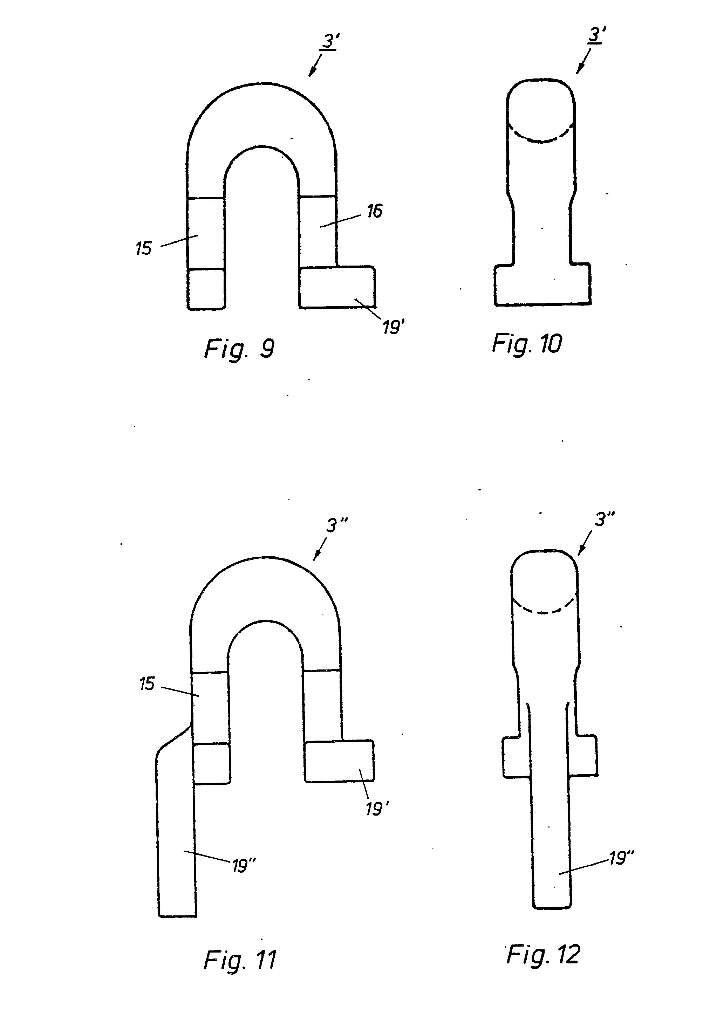

Die Fig. 9 bis 12 zeigen abgewandelte Ausführungsformen von Verbindungsbügeln 3' beziehungsweise 3''. Diese Verbindungsbügel unterscheiden sich von den Verbindungsbügeln gemäß den Fig. 7 und 8 dadurch, daß sie andere Sperrnasen aufweisen. Die in den Fig. 9 und 10 dargestellte Sperrnase 19' des Verbindungsbügels 3' erstreckt sich lediglich quer zu den Schenkeln 15 und 16 des Verbindungsbügels 3', nicht jedoch in deren Längsrichtung.

Demgegenüber weist der in den Fig. 11 und 12 dargestellte Verbindungsbügel 3'' außer der Sperrnase 19', die ähnlich ausgebildet ist wie bei dem Verbindungsbügel 3', eine weitere Sperrnase 19'' auf, die eine wesentliche Verlängerung des Schenkels 15 darstellt. Derartige Verbindungsbügel kommen zu Einsatz bei angewandelten Ausführungsformen der Erfindung, die nachstehend noch erläutert werden.

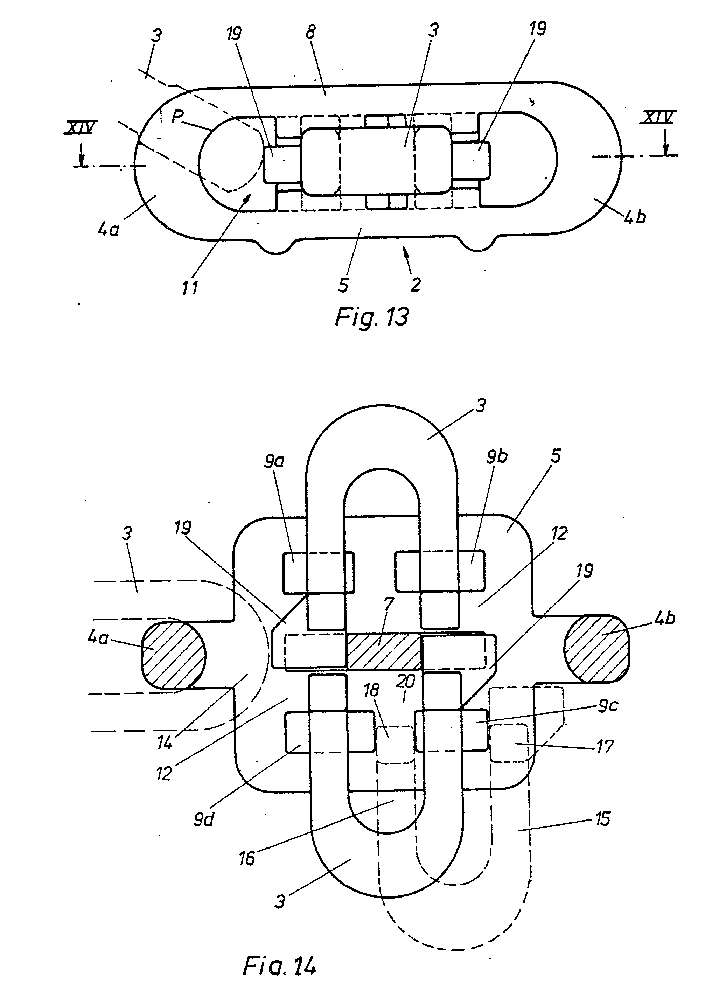

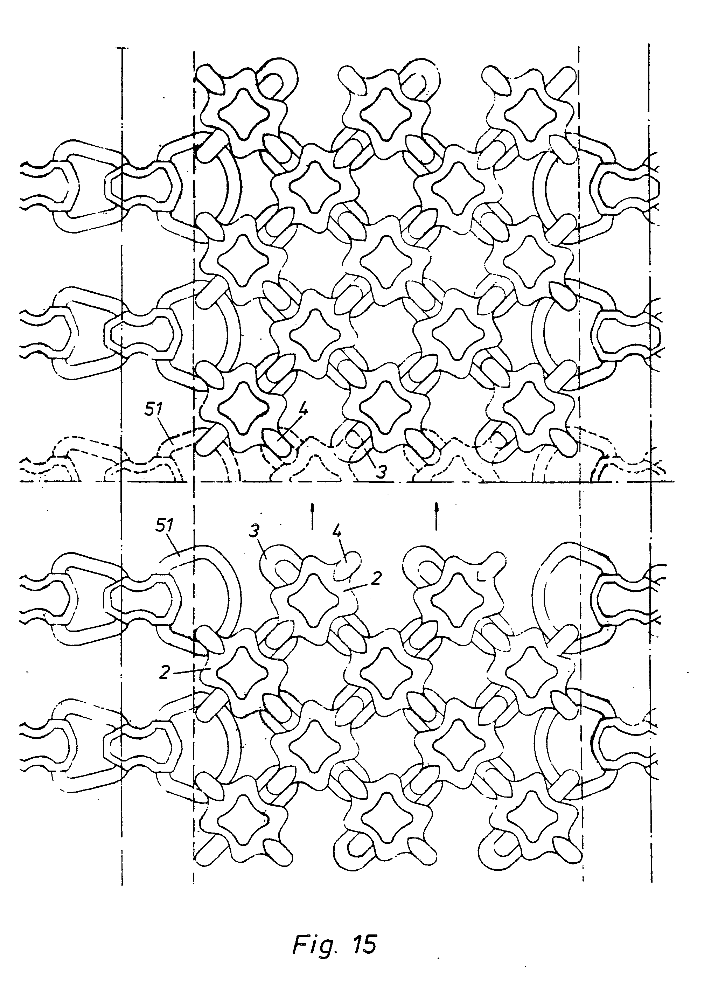

Fig. 13 und 14 veranschlaulichen, wie die Verbindungsbügel 3 in einen Grundkörper 2 eingesetzt werden, beziehungsweise in welcher Lage sich die Verbindungsbügel nach dem Einsetzen befinden.

Unten rechts in Fig. 14 ist gestrichelt ein Verbindungsbügel 3 in der Stellung beim Einschieben in das Mittelstück angedeutet. Gemäß der Darstellung wird der Verbindungsbugel 3 zunächst senkrecht zu der durch die Haltebügel 4a, 4b de finierten Ebene in den Zwischenraum 11 zwischen den Platten eingeschoben. Bei diesem Vorgang schiebt sich der Schenkel 16 mit den daran befindlichen Rastnasen (Fig. 14 zeigt die Rastnase 18) durch den durch die Haltevorsprünge 9d und 9c gebildeten Durchlaß 20 (und natürlich auf der in Fig. 14 nicht dargestellten Seite der Laufplatte 8 durch den dort vorgesehenen Durchlaß 20' zwischen den Haltevorsprüngen 9c' und 9d'). Die Haltevorsprünge 9c und 9c' sind etwas kürzer als der Abstand zwischen den beiden Schenkeln 15 und 16 des Verbindungsbügels 3.

Die Sperrnase 19 an dem Schenkel 15 ragt soweit seitlich über den Schenkel 15 hinaus, wie es der Abstand zu der Innenfläche des benachbarten Haltebügels zuläßt. Wie links in Fig. 14 angedeutet ist, befindet sich die Seitenfläche der Sperrnase 19 des eingesetzten Verbindungsbügels 3 in der Nähe der Außenfläche des Verbindungsstegs 14 des eingesetzten Verbindungsbügels. Hierdurch wird ein seitliches Verschieben der Verbindungsbügel verhindert, soweit die zugehörigen Verbindungsbügel in die Haltebügel eingehängt sind. Eine Verschiebung der Verbindungsbügel in die andere Richtung, zum Beispiel ein- Verschiebung des in Fig. 13 oben gezeichneten Verbindungsbügels 3 nach rechts wird durch die der Innenseite des Schenkels 15 benachbarte Fläche des Stegs 7 verhindert.

Aus den Fig. 13 und 14 geht eindeutig hervor, daß die durch die Verbindungsbügel 3 definierte Ebene zu der durch die Haltebügel 4a, 4b definierten Ebene einen rechten Winkel bildet, während die Mittelachsen zweier gegenüberliegender Verbindungsbügel in einem Grundkörper einerseits und die Mittelachse zweier Haltebügel 4a, 4b eines Grundkörpers andererseits aufeinander senkrecht stehen.

Die Länge der Schenkel 15 und 16 der Verbindungsbügel 3 ist hier so gewählt, daß die Außenseiten der Verbindungsstege 14 der Verbindungsbügel etwa genauso weit über den äußeren Plattenrand hinausragen wie die Außenseiten der Haltebügel 4. Andererseits besteht aber die Möglichkeit, die Schenkel der Verbindungsbügel 3 länger auszubilden, so daß die Verbindungsbügel weiter aus dem Grundkörper ragen.

Hierdurch ist es möglich, den Abstand der Grundkörper voneinander zu variieren.

Wie oben bereits erwähnt wurde, besitzen sowohl die Haltebügel 4a, 4b als auch die Verbindungsstege 14 der Verbindungsbügel 3 Verschleißverdickungen, die eine möglichst lange Lebensdauer der Ketten gewährleisten sollen. Wenn nun die miteinander in Eingriff befindlichen Verbindungsbügel 3 und Haltebügel 4 verschleißen, so wandert beispielsweise der in Fig.

14 links angedeutete Verbindungsbügel 3 nach links, so daß dementsprechend auch der in Fig. 14 oben dargestellte Verbindungsbügel 3 sich nach links bewegen kann. Trotz dieser durch den Verschleiß hervorgerufenen Bewegungsmöglichkeit innerhalb der Führungen 12 gewährleistet jedoch die Ausgestaltung der Haltevorsprünge 9a..., daß der Verbindungsbügel 3 nicht aus dem Grundkörper herausrutschen kann.

Wie man sich unter Bezugnahme auf den unten rechts in Fig. 14 dargestellten Verbindungsbügel leicht vorstellen kann, ist ein herausrutschen des Verbindungsbügels theoretisch erst dann möglich, wenn der in dem Haltebügel 4b eingehakte Verbindungsbügel praktisch völlig verschlissen ist. Dieser Zustand jedoch wird in der Praxis nicht auftreten, weil bei einem derart großen Verschleiß die Kette bereits durch das Reißen des stark verschlissenen Verbindungsbügels beschädigt wird, so daß zu einem solchen Zeitpunkt auch dann ein Herausrutschen eines in den betreffenden Grundkörper mit den Schenkeln eingesetzten Verbindungsbügel unschädlich ist.

Wie aus den bisher beschriebenen Figuren ersichtlich, haben die dort gezeigten Grundkörper rechteckigen, fast quadratischen Grundriß. Ein derartiger Grundriß eignet sich besonders für die Reifen von schweren. Erdbewegungsmaschinen, deren Reifen einen Durchmesser von bis zu 3,5 m besitzen. Die Grundkörper werden auf dem Reifen so angebracht, daß die Kanten etwa in einem Winkel von 45° zur Reifenlaufrichtung angeordnet sind. Grundsätzlich ist jedoch auc eine Anordnung möglich, bei der die Kanten der Grundkörper parallel beziehungsweise quer zur Laufrichtung liegen.

Fig. 15 zeigt in Draufsicht den Anfang und das Ende einer Kette, die zu einer Endloskette zusammengefügt werden soll. In Fig. 15 sind die hier nicht näher interessierenden seitlichen Befestigungsmittel mit eingezeichnet.

Das Zusammenfügen der beiden Kettenenden geschieht folgendermaßen: Nach dem Einhaken eines Übergangsverbindungsbügels 51 in den Haltebügel beziehungsweise Verbindungsbügel zweier benachbarter Grundkörper 2 wird der Verbindungsbügel 3 des dem Übergangsverbindungsbügel 51 benachbarten Grundkörpers 2 in den Haltebügel 4 des anzuschließenden Grundkörpers des anderen Kettenendes eingehakt. Dies ist links von der gestreichelten Mittellinie in Fig. 15 durch gestrichelte Linien angedeutet. Anschließend wird der (in der Zeichnung) darüber befindliche Verbindungsbügel 3 des auf der linken Seite befindlichen, über dem zuletzt fest gemachten Grundkörper liegenden Grundkörpers in den entsprechenden Haltebügel 4 des auf der rechten Seite gegenüberliegenden Grundkörpers 2 festgemacht. Auf diese Weise wird fortgefahren, bis die Kette über die gesamte Breite des Laufnetzes zu einer Endloskette zusammengefügt ist.

Die oben beschriebene schweißfreie und endlose Reifenschutzund Gleitschutzkette wird mittels eines beliebigen pneumatisch oder elektrisch betriebenen Drehmomentschraubers über die in der Seitenschutzkette eingehakte Ketten - Federspannvorrichtung stramm, gleichmäßig und zentrisch genau auf den Reifen mit festem Spannsitz so montiert, daß bei jeder Walkbewegung des Reifens oder ·bei jeder sonstigen kettenentspannenden Stoßeinwirkung die einzelnen Grundkörper mit ihren Reifenauflageplatten immer kippstabil und gleichmäßig ganzflächig auf der Reifenoberfläche aufliegen. Hierdurch wird ein Durchrutschen des Reifens in der Kette weitgehend vermieden.

Die oben angesprochenen Übergangsverbindungsbügel 51 gemäß Fig. 14 sind lösbar mit den seitlich anschließenden Teilen des Seitennetzes verbunden. Die spezielle Ausgestaltung des Seitennetzes ist Gegenstand einer Parallelanmeldung desselben Anmelders, so daß hier auf das Seitennetz nicht speziell eingegangen werden soll. Grundsätzlich besteht jedoch die Möglichkeit, das Laufnetz der erfindungsgemäßen Kette auch auf andere Weise am Reifen zu befestigen.

Da die Kette stramm auf dem Reifen sitzt, ist der Verschleiß der Kette relativ gering. Zur weiteren Erhöhung der Lebensdauer der Kette ist, wie in Fig. 13 auf der linken Seite angedeutet ist, der innere Querschnittsradius der Verbindungsbügel 3 kleiner als der innere Krümmungsradius des dort an dem Verbindungsbügel angreifenden Haltebügels 4a. Vorzugsweise ist der innere Querschnittsradius des Verbindungsbügels 3 etwa 20% kleiner als der innere Krümmungsradius des Haltebügels 4a. Durch die spezielle Ausgestaltung wird erreicht, daß die Innefläche des Haltebügels 4a mehr oder weniger auf der Innenfläche des Verbindungsbügels abrollt, wobei eine Kraftübertragung nur an einem Punkt P erfolgt.

Grundsätzlich läßt sich die erfindungsgemäße Kette auf jedem Reifen befestigen, und besonders gut eignen sich profillose Reifen. Eine gute Auflage der Kette auf der Reifenoberfläche wird insbesondere bei solchen Reifen erzielt, deren Profile bereits mehr als 50% abgefahren sind. Die Kette paßt sich beim Walken der Reifen und beim Überrollen von großen Felssteinen jeweils flexibel dem Reifen an. Bei hohen Geschwindigkeiten werden Überbeanspruchungen absorbiert, ein Abheben der Kette vom Reifen sowie Sackbildungen sind nicht möglich.

Die oben beschriebenen Kettenelemente haben folgende Abmessungen: Die Länge des Mittelstücks von Kante zu Kante in Richtung der Haltebügel 4 beträgt 80 mm, die Breite beträgt 75 mm, die Höhe etwa 40 mm. Die Haltebügel 4 erstrecken sich etwa 25 mm über die jeweiligen Kanten des Grundkörpers hinaus. Die inneren Querschnittsradien der Haltebügel 4 sowie der innere Querschnittsradius des Verbindungsstegs 14 der Verbindungsbügel 3 beträgt 10 mm, der innere Krümmungsradius der Haltebügel beträgt 12,5 mm. Die Haltevorsprünge 9a bis 9d sind von den benachbarten Kanten in Querrichtung 9 mm, in Längsrichtung 12 mm beabstandet. Die Führungen 12 beziehungsweise 12' sind 11 mm breit. Die Breite der Schenkel der Verbindungsbügel 3 sowie der an den Enden der Schenkel befindlichen Rastnasen beträgt 10 mm, so daß sie leicht durch die 11 mm breiten Durchlässe 20 geschoben werden können. Die Dicke der Haltebügel und Verbindungsbügel beträgt in Längsrichtung der Bügel an der dicksten Stelle 17 mm, die Sperrnasen 19 haben in Querrichtung der Verbindungsbügel eine Breite von 20 mm. Der Steg 7 des Grundkörpers hat eine Grundfläche von 20×10 mm.

Die vorliegende Erfindung ist nicht auf das oben erläuterte Ausführungsbeispiel beschränkt. Im folgenden sollen einige modifizierte Ausführungsformen beschrieben werden.

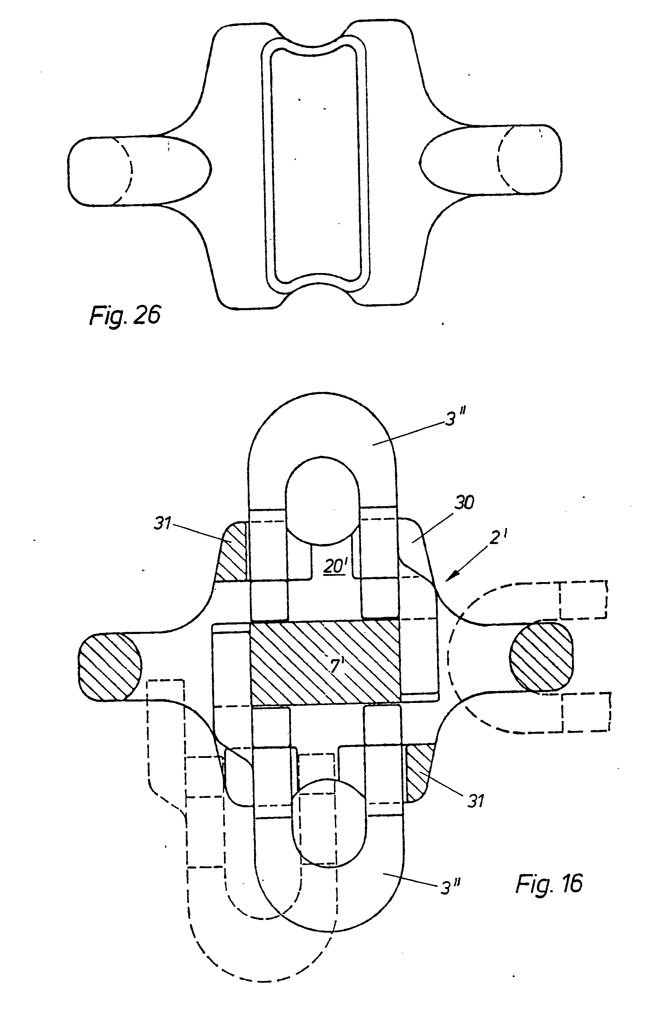

Fig. 16 zeigt eine Ausführungsform, bei der gegenüber dem Ausführungsbeispiel gemäß Fig. 14 sowohl die Haltevorsprünge als auch die Sperrnasen an der Verbindungsbügeln 3'' anders ausgebildet sind. Die Haltevorsprünge 30 liegen hier an den Kanten beziehungsweise Ecken des Grundkörpers 2'.

Zwei diametral gegenüberliegende Haltevorsprünge 31 sind von der Reifenauflageplatte zur Laufplatte hind durchgehend ausgebildet, so daß sie gleichzeitig Anschläge für die Verbindungsbügel 3'' bilden, wenn diese in den Grundkörper 2' eingesetzt sind. Das Einsetzen eines Verbindungsbügels 3' in den Grundkörper 2' ist in Fig. 16 durch einen gestrichelt dargestellten Verbindungsbügel angedeutet. Wie man aus der Zeichnung entnehmen kann, wird der Verbindungsbügel zu nächst in seiner Längsrichtung in den Grundkörper 2' eingeschoben, bis die Enden der Schenkel des Verbindungsbügels an dem mittleren Steg 7' anstoßen, sodann wird der Verbindungsbügel in rechtem Winkel bezüglich der vorausgehenden Bewegungsrichtung verschoben, bis er seine Endlage erreicht, die in Fig. 16 durch ausgezogene Linien angedeutet ist.

Bie den bisher beschriebenen Ausführungsbeispielen waren jeweils zwei sich diametral gegenüberliegende, fest mit dem Grundkörper 2 beziehungsweise 2' verbundene Haltebügel vorgesehen, die eine Ebene bildeten, die senkrecht auf der durch die Verbindungsbügel im eingesetzten Zustand definierten Ebene stand. In manchen Fällen kann es zweckmäßig oder notwendig sein, beispielsweise für den Anschluß der Seitennetze an die Ränder des Laufnetzes, statt zweier "vertikaler" Haltebügel, nur einen vertikalen Haltebügel vorzusehen, während statt des anderen vertikalen Haltebügels noch ein zusätzlicher Verbindungsbügel vorgesehen ist. Es kann darüber hinaus auch angebracht sein, wenigstens einen Haltebügel lösbar in dem Grundkörper ʻu verriegeln, und zwar auf ähnliche Weise wie die Verbindungsbügel.

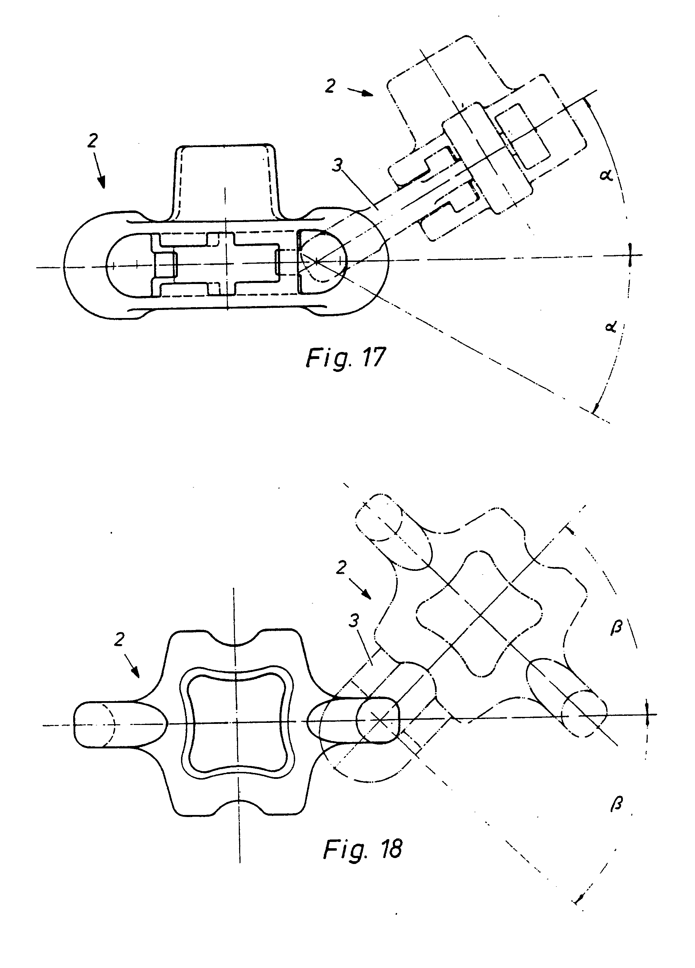

Das Zusammenfügen einzelner Kettenelemente zu Netzverbunden wird ermöglicht durch die schwenkbare Ausgestaltung der Grundkörper. Bie den oben angesprochenen Walkbewegungen des Reifens werden benachbarte Grundkörper in einer im wesentlichen senkrecht auf der Reifenoberfläche stehenden Ebene gegeneinander verschwenkt. Aus diesem Grund sowie zwecks Anpassung der Kette an die Reifenkrümmung sind die Kettenelemente in der aus den Fig. 17 und 18 ersichtlichen Weise verschwenkbar ausgebildet.

Gemäß Fig. 17 stehen zwei Grundkörper 2 über einen Verbindungsbügel 3 miteinander in Eingriff. Quer zu der durch die Grundkörper 2 gebildeten Ebene sind die beiden benachbarten Grundkörper 2 in beide Richtungen um einen Winkel α gegeneinander verschwenkbar. Der Winkel α beträgt mindestens etwa 20°, vorzugsweise 30°.

Fig. 18 veranschaulicht, wie zwei benachbarte Grundkörper 2, die miteinander über einen Verbindungsbügel 3 verbunden sind, in der durch die Grundkörper definierten Ebene gegeneinander verdreht werden können. Der Verdrehungswinkel beträgt bezüglich der Längsmittelachse der Grundkörper zu jeder Seite (Winkel β) mindestens 30', vorzugsweise etwa 45°.

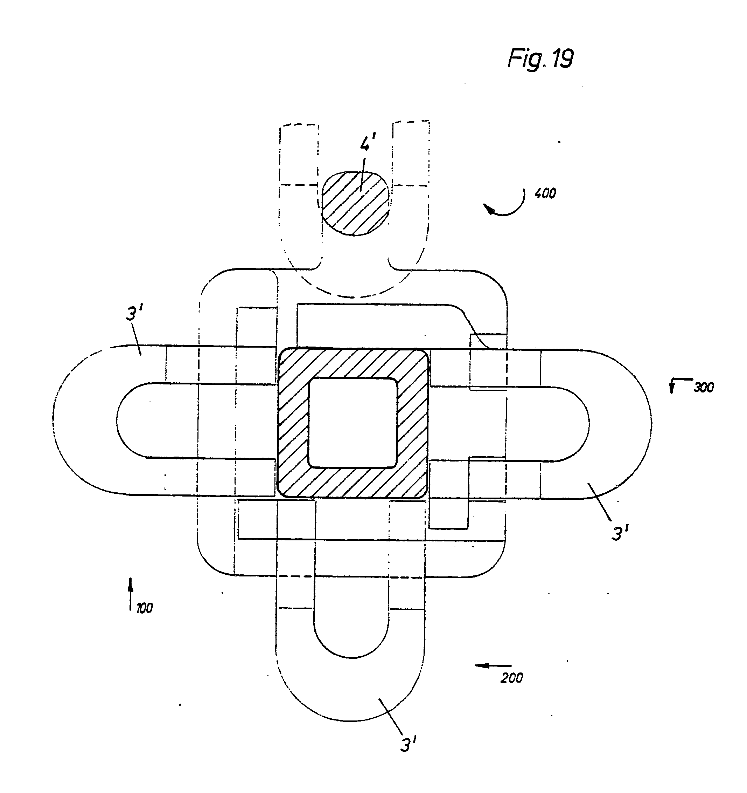

Die Fig. 19 zeigt eine Ausführungsform eines Grundkörpers mit Verbindungsbügeln, bei der lediglich ein einziger Haltebügel 4' vorgesehen ist, während der andere Haltebügel durch einen weiteren Verbindungsbügel ersetzt ist. Die Verbindungsbügel 3' entsprechen den in dev Fig. 9 und 10 dargestellten Ausführungsbeispielen. Wie aus Fig. 19 klar hervorgeht, sind die Haltevorsprünge in dem Grundkörper derart ausgebildet, daß die drei Verbindungsbügel 3' nach ihrem nacheinander erfolgten Einsetzen in den Grundkörper und nach dem Einhaken des zu einem benachbarten Grundkörper gehörigen Verbindungsbügels fest verriegelt sind. Zunächst wird der in der Zeichnung links dargestellte Verbindungsbügel 3' in Richtung des Pfeils 100 in den Grundkörper eingeschoben, anschließend wird von rechts nach links der in Fig. 19 unten dargestellte Verbindungsbügel in den Grundkörper eingeschoben, der nach Erreichen seiner Endstellung verhindert, daß der in der Zeichnung links dargestellte Verbindungsbügel 3' aus seiner Stellung herausrutschen kann. Nach dem Einschieben des in der Zeichnung rechts dargestellten Verbindungsbügels, was druch den abgewinkelten Pfeil 300 angedeutet ist, ist auch der untere Verbindungsbügel 3' verriegelt. Schließlich wird der rechte Verbindungsbügel 3' durch das Einhaken des oberen Verbindungsbügels verriegelt.

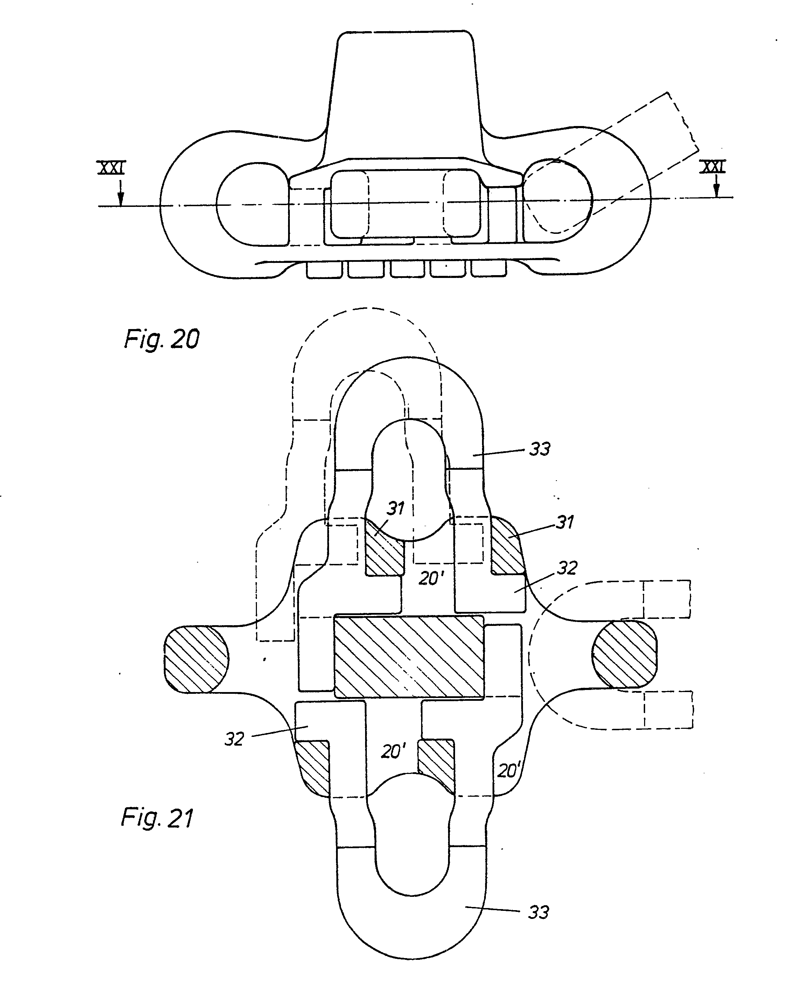

Die Fig. 20 und 21 zeigen ein weiteres Ausführungsbeispiel der Erfindung, welches sich durch eine besonders flache Bauweise auszeichnet. Diese flache Bauweise wird ermöglicht durch die Ausgestaltung der Rastnasen in Form von in der Ebene der Verbindungsbügel liegenden Winkelhaken. Fig. 21 zeigt anschaulich, wie der dort in verscheidenen Stellungen dargestellte Verbindungsbügel in den Grundkörper eingesetzt wird. Die als Rastnasen dienenden Winkelhaken 32 der Verbindungsbügel 33 greifen nicht speziell in auf der Innenseite von Reifenauflageplatte und Laufplatte ausgebildete Haltevorsprünge, sondern lediglich hinter Stege, welche die Reifenauflageplatte mit der Laufplatte verbinden. Dadurch, daß bei dieser Ausführungsform keine senkrecht zur Ebene der Verbindungsbügel abstehende Rastnasen benötigt werden, brauchen auch keine entsprechenden Haltevorsprünge und der zwischen diesen vorzusehende Zwischenraum für das Einführen der Verbindungsglieder vorgesehen zu sein, so daß sich insgesamt die Bauhöhe des Grundkörpers verringert. Im übrigen ähnelt die Ausführungsform gemäß Fig. 21 den bisher beschriebenen Ausführungsformen.

Es wurde oben bereits erwähnt, daß zur Erhöhung der Lebensdauer Profile an dem Grundkörper vorgesehen sein können. Erfindungsgemäß ist vorgesehen, entweder auf der Oberseite der Laufplatte oder auf der Unterseite der Reifenauflageplatte einen oder mehrere Profilkörper vorzusehen, oder aber auf den Außenseiten beider Platten Profilkörper auszubilden, um sowohl eine verbesserte Traktion und Seitenstabilität zu erhalten, als auch die Lebensdauer der Kette insgesamt zu erhöhen. Durch entsprechende Ausbildung der Profilkörper auf beiden Seiten des Grundkörpers läßt sich die erfindungsgemäße Kette als sogenannte "Wendekette" verwenden, die, wenn die Profilkörper auf der einen Seite abgenutzt sind, nach wenden weiter benutzt werden kann, weil dann die noch relativ unverschlissenen Profilkörper der gegenüberliegenden Seite vorhanden sind.

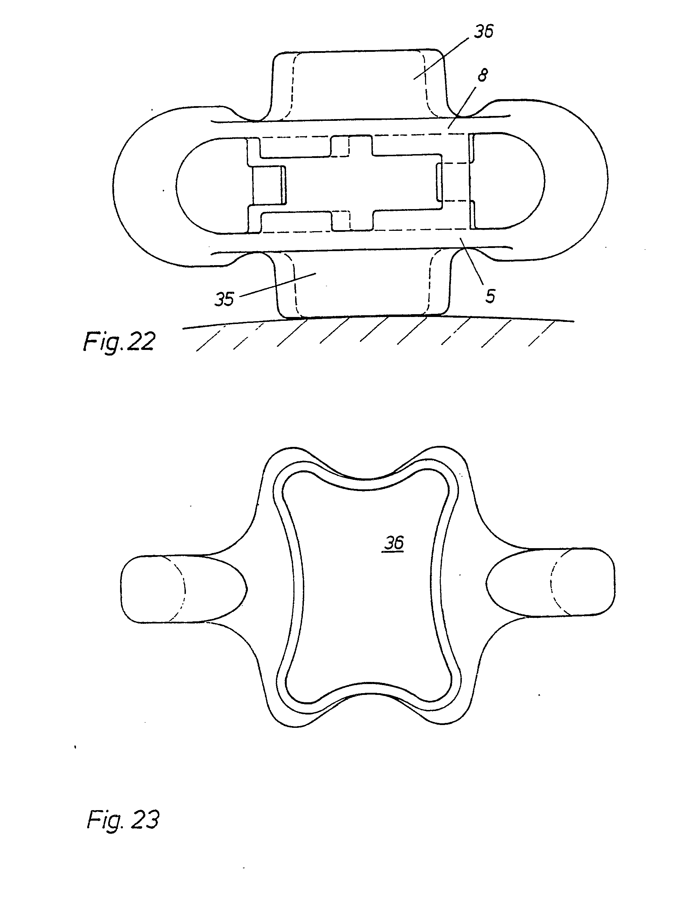

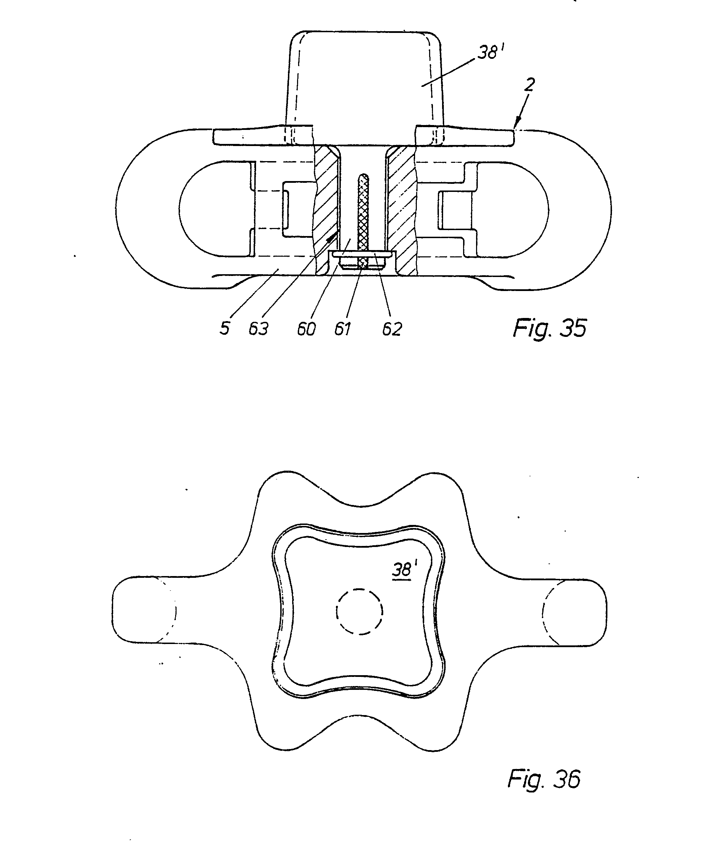

Die Fig. 22 und 23 zeigen einen Grundkörper, bei dem auf der Außenseite der Reifenauflageplatte 5 ein vierzacksternförmiger Profilkörper 35 und auf der Außenseite der Laufplatte 8 ein ebenso ausgebildeter Profilkörper 36 vorgesehen sind. Der Grundriß des Profilkörpers 36 ist aus Fig. 34 ersichtlich.

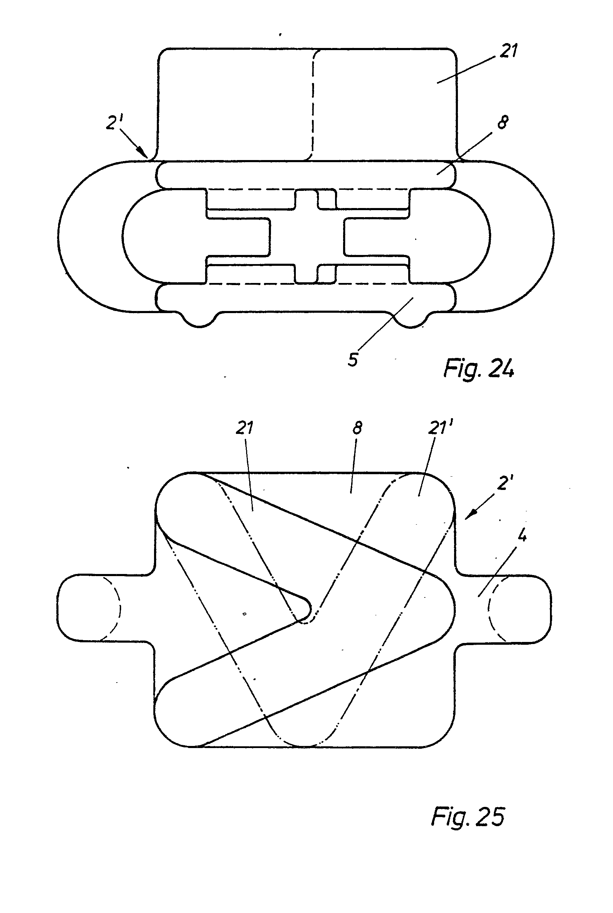

Die Fig. 24 und 25 zeigen zusätzlich zu auf der Außenseite der Reifenauflageplatte 5 vorgesehenen Wulsten auf der Außenseite der Laufplatte 8 einen V-förmigen Profilkörper 21, der auch um 90° versetzt an dem Grundkörper vorgesehen sein kann. Ein solcher, um 90° versetzter Profilkörper 21' ist in Fig. 25 gestrichelt angedeutet. Selbstverständlich kann statt der Wulste auf der Außenseite der Reifenauflageplatte 5 auch dort ein Profilkörper ähnlich dem Profilkörper 21 vorgesehen sein.

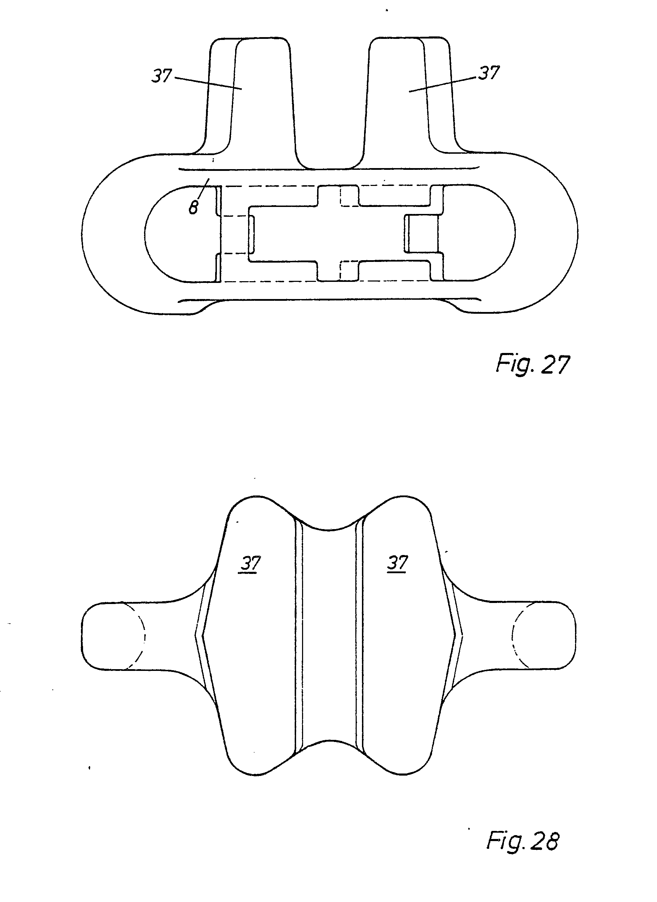

Die Fig. 26 bis 32 zeigen schematisch verschiedene Ausgestaltungsmöglichkeiten für die Profilkörper auf der Außenseite der Reifenauflageplatte und/oder der Laufplatte. Gemäß den Fig. 27 und 28 sind zwei im wesentlichen zueinander parallele, im wesentlichen rechteckige Profilkörper 37 auf der Laufplatte 8 vorgesehen. Wenn auch auf der Reifenauflageplatte entsprechend ausgebildete Profilkörper vorgesehen sind, so werden die Profilkörper zweckmäßigerweise mit einer etwas geringeren Bauhöhe ausgebildet. Gemäß Fig. 26 ist nur ein rechteckiger Profilkörper vorgesehen.

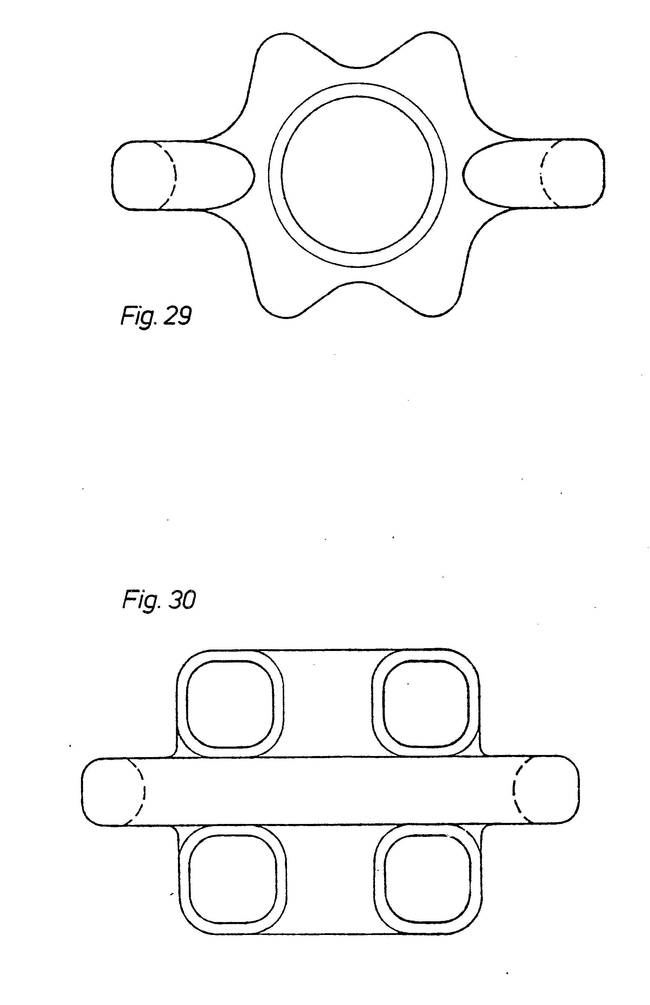

Gemäß Fig. 29 weist der Grundkörper einen Profilkörper mit kreisförmigem Querschnitt auf. Ein solcher Profilkörper kann auf beiden Platten des Grundkörpers vorgesehen sein. Darüber hinaus kann der Profilkörper einen größeren Kreisumfang aufweisen, als er in Fig. 29 gezeigt ist.

Gemäß Fig. 30 sind an den vier Ecken des Grundkörpers Profilkörper jeweils quadratischen Grundrisses vorgesehen. Solche Profilkörper können selbstverständlich auf beiden Platten des Grundkörpers vorgesehen sein.

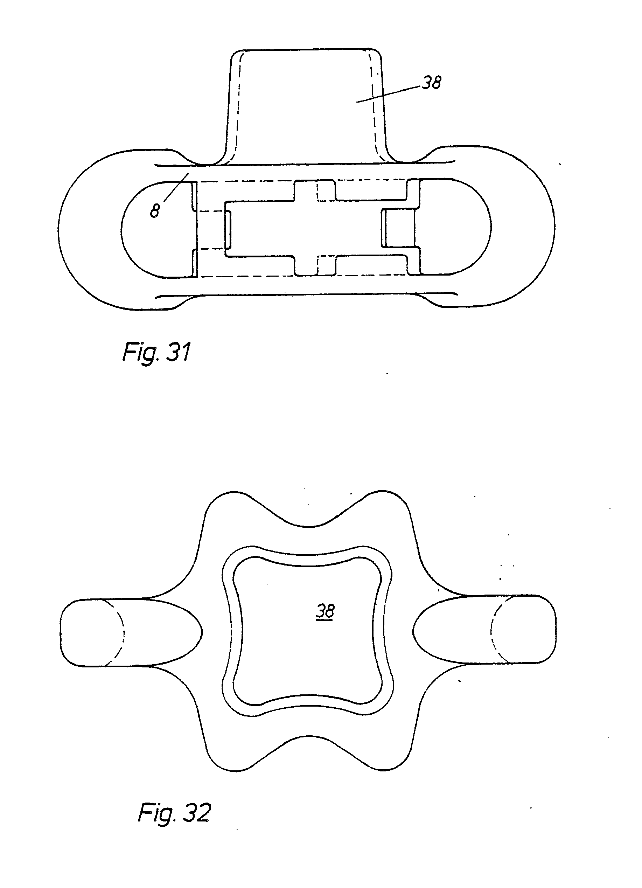

Eine bevorzugte Form für die Profilkörper ist in den Fig. 31 und 32 dargestellt. Gemäß dieser Ausführungsform der Erfindung ist der Profilkörper 38 auf der Laufplatte 8 so ausgebildet, daß er einen etwa vierzacksternförmigen Grundriß aufweist. Durch diesen Grundriß wird eine besonders gute Traktion gewährleistet. Auf der Reifenauflagefläche kann ebenfalls ein Profilkörper mit einem solchen Grundriß vorgesehen sein, zweckmäßigerweise haben die Profilkörper dann eine etwas geringere Bauhöhe.

Um einen guten Reißschluß zwischen der Reifen- und Gleitschutzkette und der Oberfläche des zu schützenden Reifens zu gewährleisten, schlägt, die vorliegende Erfindung gemäß dem in den Fig. 34 und 35 dargestellten Ausführungsbeispiel vor, auf der Reifenauflageplatte 5 flächig Gumminoppen 38 aufzuvulkanisieren. Diese Gumminoppen gewährleisten, daß der Grundkörper satt auf der Reifenoberfläche aufliegt und praktisch nicht verrutscht. Es ist klar, daß auf der Laufplatte 8 Profilkörper der oben erläuterten Art vorgesehen sein können.

Anstelle der Noppen können auch Streifen vorgesehen sind.

Darüber hinaus brauchen die Noppen beziehungsweise Streifen nicht unbedingt aus Gummi zu bestehen, sondern es kann irgend ein geeigneter Kunststoff verwendet werden, der bezüglich des Reifenmaterials einen guten Reibungskoeffizienten besitzt.

Die oben näher beschriebenen Profilkörper sind auf die jeweiligen Grundkörper 2 aufgeschmiedet, das heißt, die Grundkörper sind einstückig mit den Profilkörpern ausgebildet. Diese Art der Anbringung der Profilkörper gewährleistet, daß die Profilkörper praktisch nicht abreißen können.

Zur Erneuerung beziehungsweise teilweisen Erneuerung der Kette, mit dem Ziehl, eine neuwertige Kette zu erhalten, können einzelne Grundkörper und/oder Verbindungsbügel der Kette ersetzt werden. Hierbei geht man ebenso wie bei eventuell notwendigen Reparaturen ähnlich vor wie bei dem Zusammenfügen der beiden Ketenenden zu einer Endloskette, wie es oben näher beschrieben wurde.

Eine andere Möglichkeit, eine teilweise verschlissene Kette so zu erneuern, daß man praktisch eine neuwertige Kette erhält, besteht darin, die oben erläuterten Profilkörper als lösbare Profilkörper auszubilden. Bevorzugt werden die auf der Laufplatte vorgesehenen Profilkörper, die im folgenden als Laufprofilkörper bezeichnet werden, auswechselbar ausgestaltet.

Fig. 35 zeigt in Seitenansicht einen Grundkörper 2 mit auf dessen Laufplatte lösbar befestigtem Laufprofilkörper 38', der ähnlich, wie es in den Fig. 31 und 32 dargestellt ist, als vierzacksternförmiger Körper ausgebildet ist. Bei diesem Ausführungsbeispiel besitzt der Laufprofilkörper 38' einen einstückig mit ihm ausgebildeten Haltezapfen 60, in dem ein mit einer Gummifüllung 61 gefüllter Längsschlitz vorgesehen ist. Der Haltezapfen 60 durchsetzt eine als dem Grundkörper 2 in seiner Mitte durchlaufende Bohrung 63 ausgebildete Öffnung, so daß das Ende des Haltezapfens 60 auf der Seite der Reifenauflageplatte 5 aus der Öffnung 63 austritt. An dieser Stelle ist der Haltezapfen und damit der Laufprofilkörper 38' mittels eines in einer Ringnut des Haltezapfens 60 eingreifenden Federrings 62 festgemacht, so daß sich der Laufprofilkörper 38' nicht von dem Grundkörper lösen kann. Fig. 36 zeigt den in Fig. 35 dargestellten Grundkörper in Draufsicht.

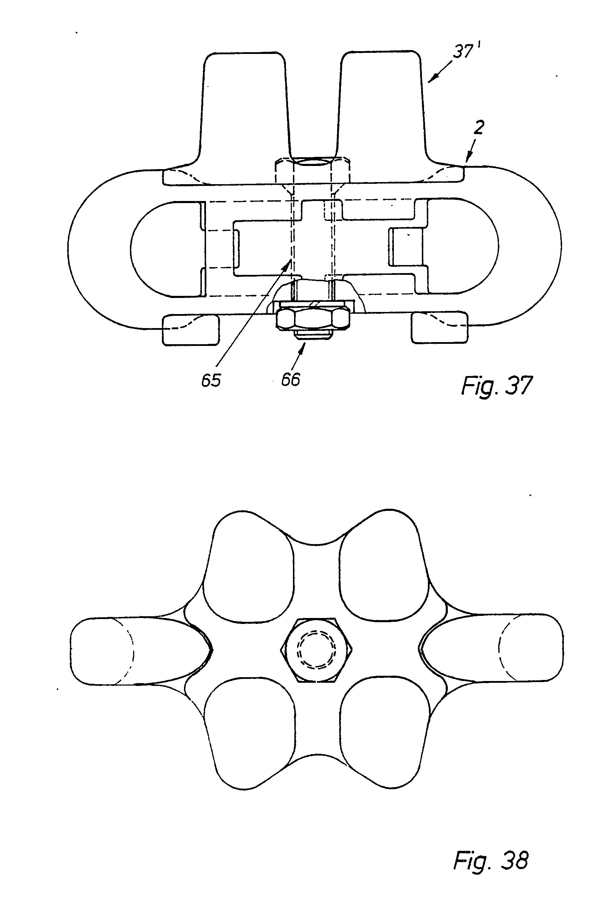

Fig. 37 zeigt eine andere Ausführungsform eines Grundkörpers 2. Bei diesem Grundkörper ist auf der Laufplatte ein mit vier noppenartigen Erhebungen versehener Laufprofilkörper 37' befestigt. Der Grundkörper 2 besitzt eine ihn durchsetzende Bohrung 65, die sich von der Mitte der Laufplatte durch den die Laufplatte mit der Reifenauflageplatte verbindenden Steg bis zur Unterseite der Reifenauflageplatte durchsetzt. Der Profilkörper 37' besitzt eine mit der Bohrung 65 fluchtende Bohrung. Grundkörper 2 und Laufprofilkörper 37' sind mittels einer Schraube 66 verbunden, wobei die Schraube 66 bei diesem Ausführungsbeispiel im Bereich der Reifenauflageplatte eine Gegenmutter besitzt.

Wie bereits eingangs erwähnt, betrifft die Erfindung speziell die Ausgestaltung des Laufnetzes einer Reifen- und Gleitschutzkette. Für den Übergang zwischen dem Laufnetz und den Seitennetzen, wie er in Fig. 1 angedeutet ist, werden am äußeren Rand des Laufnetzes nicht die oben beschriebenen Verbindungsbugel 3, 3', ... verwendet, sondern Verbindungsbügel, die eine bezüglich ihrer durch die Schenkel definierten Ebene um 90° gedrehte Öse besitzen.

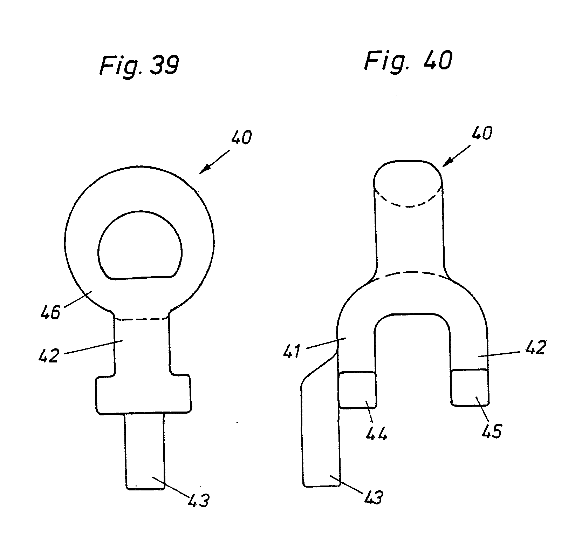

Fig. 39 und 40 zeigen ein Verbindungsglied 40 mit zwei Schenkeln 41 und 42. Diese Schenkel definieren eine Ebene, die im folgenden als "Ebene des Verbindungsgliedes" bezeichnet werden soll. An dem Schenkel 41 ist eine Sperrnase 43 vorgesehen, welche die oben erläuterte Aufgabe hat. Ferner sind Rastnasen 44 und 45 vorgesehen. Im Gegensatz zu den oben erläuterten, schäkelartig ausgebildeten Verbindungsbügeln weist der Verbindungsbügel 40 eine Öse 46 auf, deren Ebene bezüglich der Ebene des Verbindungsgliedes um 90° gedreht ist. Es ist klar, daß die Öse 46 dann, wenn das Verbindungsglied 40 in einem der oben beschriebenen Grundkörper eingesetzt ist, vertikal bezüglich der Reinfenoberfläche beziehungsweise bezüglich des Grundkörpers liegt.

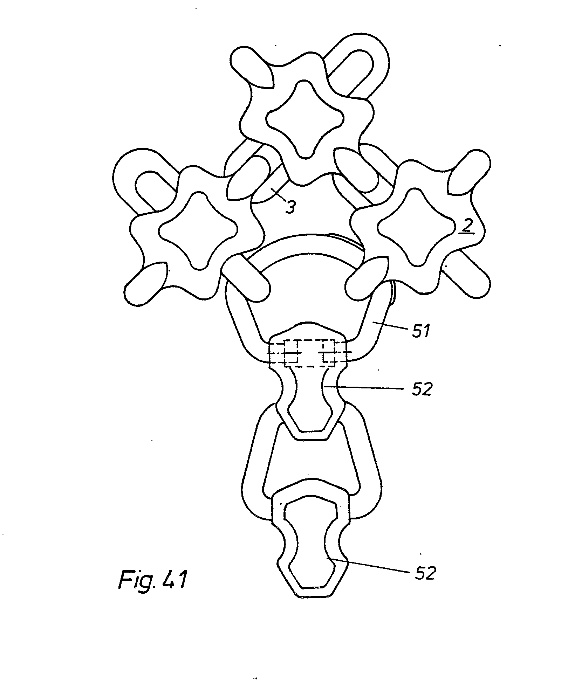

Fig. 41 zeigt den Randbereich eines Laufnetzes einer Reifenund Gleitschutzkette, nämlich diejenige Stelle, wo das Laufnetz in ein Seitennetz, also in das Innen- oder Außennetz übergeht. Während innerhalb des Laufnetzes ausschließlich "horizontale" Verbindungsbügel 3 vorgesehen sind, kommen am Außenrand des Laufnetzes die oben beschriebenen Verbindungsbügel 40 zum Einsatz, und zwar trägt jeder Grundkörper 2 im Randbereich des Laufnetzes genau ein Verbindungsglied 40, so daß dieses Verbindungsglied ebenso wie der benachbarte Haltebügel 4 des benachbarten Grundkörpers 2 vertikal bezüglich der Grundkörper und der Reifenoberfläche liegt.

Wie in Fig. 41 schematisch angedeutet ist, ist durch den Verbindungsbügel 40 und den benachbarten Haltebügel 4 beidseitig des Laufnetzes ein selbstsperrender Übergangsverbindungsbügel 51 eingehakt, an dem—ebenfalls beidseitig—radial verlaufend, selbstsperrende Stoßabweiser 52 eingehakt sind. Die Stoßabweiser 52 bestehen jeweilig aus einem mit einer oberen Aufnahmeöffnung für den Stoßfangerbügel 51 und jeweilig einer unteren Aufnahmeöffnung versehenen Schmiedeteil. Die untere Aufnahmeöffnung dient zur Aufnahme eines weiteren Stoßfängerbügels 51, an dem dann ein weiterer Stoßabweiser 52 selbstsperrend eingehakt ist. Die durch die Stoßfängerbügel 51 und die Stoßabweiser 52 beliebig lang (entsprechend der möglicherweise noch im Gesteinsangriff stehenden Reifenseitenwand) zu montierenden beidseitigen Reifenseitenschutz/Stoßfänger - Kettennetze verlaufen im montierten Zustand der Gesamtkette etwa radial zum Reifen.

**Patentansprüche**

1. Reifen- und Gleitschutzkette für gummibereifte Fahrzeuge, insbesondere schwere und schnellfahrende Erdbewegungsmaschinen, die mit im wesentlichen gleichförmigen ausgebildeten, auf der Reifenoberfläche mit einer Reifenauflageplatte (5) aufliegenden, vorzugsweise einstückigen und schweißnahtlosen Grundkörpern (2, 2') versehen ist, welche jeweils außer der Reifenauflageplatte (5) eine von dieser durch einen Zwischenraum (11) mit Abstand sowie zu ihr im wesentlichen parallel angeordnete Laufplatte (8) besitzen, wobei sich von der Reifenauflageplatte (5) zur Laufplatte (8) nach außen gebogene, ösenförmige Haltebügel (4a, 4b) erstrecken, an denen jeweils schäkelähnliche Verbindungsbügel (3, 3', 3'') angreifen, die mit benachbarten Grundkörpern verbunden sind, wobei auf den Innenseiten von Reifenauflage- und Laufplatte (5, 8) im Zwischenraum (11) zwischen diesen aufeinander zu gerichtete Haltevorsprünge (9a—9d) vorgesehen sind, hinter welche Rastnasen (17, 18; 17', 18') greifen, die an den Schenkelenden der Verbindungsbügel (3, 3', 3'') angeordnet sind, und wobei die Haltevorsprünge (9a—9d) und die Verbindungsbügel (3, 3', 3'') derart ausgebildet und angeordnet sind, daß letztere in einer zur Ebene der Haltebügel (4a, 4b) etwa senkrechten Ebene liegen und ihre Längsachse mit der Längsachse der Haltebügel einen etwa rechten Winkel bildet, dadurch gekennzeichnet, daß die Haltevorsprünge (9a—9d) etwa parallel zu den Haltebügeln (4a, 4b) und nach außen versetzt zu diesen angeordnet sind, um zwischen sich auf oder in jeder Platteninnenseite zu den Haltebügeln (4a, 4b) im wesentlichen parallele Führungen (12, 12') für die Rastnasen (17, 18; 17', 18') an den Enden der Verbindungsbügel (3) zu bilden, daß auf den Innenseiten der Platten (5, 8) in der Ebene der Haltebügel (4a, 4b) Anschläge (10, 10') vorgesehen sind, die mit den auf beiden Seiten benachbarten Haltevorsprüngen (9a—9d); 9a'—9d') die Führungen (12, 12') bilden, daß die Reifenauflageplatte (5) mit der Laufplatte (8) über mindestens einen etwa senkrecht zur Plattenebene angeordneten Steg (7) verbunden ist, der vorzugsweise einen Teil der Anschläge (10, 10') bildet und daß der Grundkörper einen etwa quadratischen Grundriß aufweist.

2. Kette nach Anspruch 1, dadurch gekennzeichnet, daß auf zwei gegenüberliegenden Seiten des Grundkörpers (2) jeweils ein Haltebügel (4a, 4b) die Reifenauflageplatte (5) mit der Laufplatte (8) verbindet.

3. Kette nach Anspruch 1 und 2, dadurch gekennzeichnet, daß die Haltevorsprünge (9a—9d; 9a'—9d') auf beiden Seiten der Haltebügel (4a, 4b) für jeweils einen Verbindungsbügel als Haltevorsprungspaare (9a, 9a'; 9b, 9b'...) mit gleicher Form auf den gegenüberliegenden Platteninnenseiten ausgebildet sind, daß jeweils zwei dieser Haltevorsprungspaare auf einer Seite der haltebügel (4a, 4b) zwischen sich beziehungsweise neben sich Einsetz-Durchlässe (20) bilden für die aus der Ebene der Verbindungsbügel (3) etwa senkrecht vorspringenden Rastnasen (17, 18; 17', 18'), und daß die Rastnasen derart bemessen sind, daß sie nach dem Einsetzen in den Führungen (12) mit Spiel sitzen.

4. Kette nach einem der Ansprüche 1 bis 3, dadurch gekennzeichnet, daß die Haltevorsprünge als die Reifenauflageplatte mit der Laufplatte verbindende Stege (31) ausgebildet sind, die neben sich Einsetz-Durchlässe (20') bilden für die in der Ebene der Verbindungsbügel (33) liegenden, vorzugsweise als Winkelhaken (32) ausgebildeten Rastnasen. (Fig. 21)

5. Kette nach einem der Ansprüche 1 bis 4, dadurch gekennzeichnet, daß die schäkelartigen, U-förmigen Verbindungsbügel (3) an einem Schenkelende mit einer im eingesetzten Zustand sich im wesentlichen in Richtung des benachbarten Haltebügels (4a, 4b) erstreckenden Sperrnase (19) versehen sind, die zwischen sich und der Innenfläche des Haltebügels einen lichten Raum beläßt, der die Aufnahme des Verbindungsstegs (14) eines dort eingehängten Verbindungsbügels (3) gestattet.

6. Kette nach Anspruch 5, bei der die Rastnasen (17, 18; 17', 18') und Haltevorsprünge (9a—9d, 9a'—9d') in zu den Haltebügeln paralleler Richtung derart bemessen sind, daß bei Verschleiß der Sperrnase (19) und/oder des dieser benachbarten Verbindungsstegs (14) beziehungsweise des an diesem angreifenden Haltebügels (4a, 4b) ein Lösen der Rastnasen (17, 18; 17', 18') aus den Führungen verhindert wird.

7. Kette nach einem der vorhergehenden Ansprüche, dadurch gekennzeichnet, daß in den Grundkörpern insbesondere an den seitlichen Rändern des Laufnetzes für den Anschluß der Seitennetze jeweils ein Verbindungsbügel (40) mit einer Öse (46) ausgestattet ist, deren Ebene etwa rechtwinklig gegenüber der Ebene des anderen Verbindungsbügels verdreht ist.

8. Kette nach einem der Anspruch 1 bis 7, bei der Reifenauflageplatte (5) und Laufplatte (8) im wesentlichen quadratischen Grundriß aufweisen und sich die Haltebügel (4a, 4b) von der Mitte gegenüberliegender Kanten aus erstrecken.

9. Kette nach einem der Ansprüche 1 bis 11, bei der die inneren Krümmungsradien der Haltebügel (4a, 4b) etwa geringer, vorzugsweise circa 20% geringer, sind als der innere Krümmungsradius des Verbindungsbügels (3) sowie dessen innerer, mit dem Haltebügel in Eingriff kommender Querschnittsradius.

10. Kette nach einem der Ansprüche 1 bis 12, dadurch gekennzeichnet, daß die Haltebügel und die Verbindungsbügel (3) Verschleißverdickungen (13) aufweisen.

11. Kette nach einem der Ansprüche 1 bis 13, bei der wenigstens ein Teil der Laufplatten (8) und/oder der Reifenauflageplatten (5) ein Profil (21, 21', 36, 37, 38, 39) aufweist.

12. Kette nach Anspruch 14, dadurch gekennzeichnet, daß das Profil durch Profilkörper mit V-förmigem, rechteckigem, kreisförmigem und insbesondere vierzacksternförmigem Grundriß gebildet ist.

13. Kette nach Anspruch 15, dadurch gekennzeichnet, daß auf jeder Platte lediglich ein einzelner Profilkörper ausgebildet ist.

14. Kette nach einem der Ansprüche 14 bis 16, dadurch gekennzeichnet, daß die Reifenauflageplatten (5) mit Noppen (29) oder Streifen ausgestattet sind, die aus Kunststoff, vorzugsweise Gummi, bestehen.

15. Kette nach einem der Ansprüche 15 bis 17, dadurch gekennzeichnet, daß die Profilkörper auf die Grundkörper aufgeschmiedet sind.

16. Kette nach einem der Ansprüche 12 bis 14, dadurch gekennzeichnet, daß die auf der Laufplatte (8) vorgesehenen Laufprofilkörper (37', 38') lösbar mit den Grundkörper (2) verbunden sind.

17. Kette nach Anspruch 16, dadurch gekennzeichnet, daß die Laufprofilkörper (37', 38') aus gesenkgeschmiedeten Stahlteilen oder, wenigstens teilweise, verschleißfesten Kunststoffteilen bestehen.

18. Kette nach Anspruch 16 oder 17, dadurch gekennzeichnet, daß in dem Grundkörper eine vorzugsweise als Bohrung ausgebildete zentrale Öffnung (63, 65) vorgesehen ist, in die ein an dem Laufprofilkörper (37', 38') befestigter Haltezapfen (60) eingesetzt ist.

19. Kette nach Anspruch 20, dadurch gekennzeichnet, daß der Haltezapfen (60) einen vorzugsweise gummigefüllten Längsschlitz (61) aufweist, und daß das dem Laufprofilkörper abgewandte Ende des Haltezapfens mittels eines Federrings (62) am Grundkörper fixiert ist.

20. Kette nach einem der Ansprüche 16 und 17, bei dem der Laufprofilkörper vorzugsweise mehrere Profilkörper aufweist, dadurch gekennzeichnet, daß der Laufprofilkörper (37') am Grundkörper mittels einer Schraube (66), die den Grundkörper (2) mittig durchsetzt, befestigt ist.

21. Kette nach einem der Ansprüche 11 bis 20, dadurch gekennzeichnet, daß zur Bildung einer Wendekette sowohl Reifenauflageplatte (5) als auch Laufplatten (8) etwa die gleiche Profilstärke, vorzugsweise das gleiche Profil (35, 36) aufweisen.

22. Kette nach Anspruch 11, bei der auf der Außenseite der Reifenauflageplatte (5) vorzugsweise mehrere quer zur Reifenlaufrichtung orientierte Längswülste (6a, 6b) vorgesehen sind.

23. Kette nach einem der Ansprüche 11 bis 22, dadurch gekennzeichnet, daß die Länge des Grundkörpers sich zu dessen Höhe einschließlich Profil wie 2:1 verhält.

24. Kette nach Anspruch 12, dadurch gekennzeichnet, daß der Grundkörper im Grundriß circa 80×80 mm beträgt, und daß die inneren Krümmungsradien der Verbindungsbügel (3), deren Querschnittsradius an dem Eingriffsteil und der Querschnittsradius des Eingriffsteils der Haltebügel circa 10 mm betragen, während der innere Krümmungsradius des Haltebügels circa 12 bis 13 mm beträgt.

25. Kette nach Anspruch 23 oder 24, dadurch gekennzeichnet, daß die Haltevorsprünge in Richtung quer zur Ebene der Haltebügel ebenso wie die Rastnasen (17, 18; 17', 18') 10 mm breit sind, während die Führungen (12) für die Rastnasen circa 11 mm breit sind, und daß die Haltevorsprünge (9a—9d, 9a'—9d') circa 9 mm von der jeweils benachbarten Plattenkante beabstandet sind.

26. Kette nach einem der Ansprüche 1 bis 25, bei der die Grundkörper (2) in der durch sie gebildeten Ebene bezüglich der Längsmittelachse eines benachbarten Grundkörpers in beide Richtungen um mindestens etwa 30°, vorzugsweise etwa 45°, verschwenkbar sind.

27. Kette nach einem der Ansprüche 1 bis 26, bei der die Grundkörper senkrecht zu der durch sie gebildeten Ebene bezüglich der Längsmittelachse eines benachbarten Grundkörpers in beide Richtungen um mindestens etwa 20°, vorzugsweise etwa 30°, verschwenkbar sind.

28. Kette nach einem der Ansprücche 1 bis 27, bei der die Grundkörper zu einem Netzverbund zusammengefügt sind, in dem Maschen mit vier, sechs beziehungsweise drei und sechs, sowie acht beziehungsweise vier und acht Grundkörpern vorgesehen sind.

29. Kette nach einem der Ansprüche 1 bis 28, die ohne Zusatzteile zu einer Endloskette geschlossen wird, indem—ausgehend vom Kettenrand—ein zu einem Grundkörper des Kettenendes gehöriger Verbindungsbügel (3) in den Haltebügel (4) eines entsprechenden Grundkörpers (2) des Kettenanfangs eingehakt wird, und der zulletzterem Grundkörper gehörige Verbindungsbügel in den Haltebügel des esteren Grundkörpers eingehakt wird.

**Revendications**

1. Chaîne pour pneus, antidérapante pour véhicules montés sur pneumatiques en caoutchouc, notamment pour des engins de terrassement lourds à vitesse rapide, laquelle est munie de corps de base (2, 2') essentiellement de conception uniforme, reposant sur la surface du pneu par l'intermédiaire d'une plaque d'appui de pneumatique (5), de préférence d'une seule pièce et sans soudure, lesquels respectivement en plus de la plaque d'appui du pneumatique (5) comportent une plaque de roulement (8) agencée à une certaine distance de ladite plaque d'appui à travers un espace intermédiaire (11) et essentiellement parallèle à celle-ci, des étriers de retenue (4a, 4b) en forme d'oeillet se prolongeant depuis la plaque d'appui du pneumatique (5) en direction de la plaque de roulement (8), courbés vers l'extérieur, sur lesquels s'engagent respectivement des étriers de jonction (3, 3', 3'') du type à mailles, qui sont reliés aux corps de base limitropes, des saillies de retenue (9a—9d) étant prévues sur les côtés intérieurs de la plaque de roulement et de la plaque d'appui du pneumatique (5, 8) dans l'espace intermédiaire (11) dirigées entre ces dernières l'une vers l'autre, derrière lesquelles s'engrènent des tenons de repos (17, 18, 17', 18') qui sont situés sur les extrémités des ailes des étriers de jonction (3, 3', 3''), et les saillies de retenue (9a—9d) et les étriers de jonction (3, 3', 3'') étant conçus et agencés de telle manière que ces derniers se trouvent dans un plan sensiblement perpendiculaire au plan des étriers de retenue (4a, 4b) et que leur axe longitudinal forme un angle sensiblement droit avec l'axe longitudinal des étriers de retenue, caractérisée en ce que les saillies de retenue (9a—9d) sont agencées de façon sensiblement parallèle aux étriers de retenue (4a, 4b) et sont décalées vers l'extérieur par rapport à ceux-ci, afin de former des guidages (12, 12') pour les tenons d'arrêt (17, 18, 17', 18') sur les extrémités des étriers de jonction (3), essentiellement parallèles entre eux sur ou dans chaque côté intérieur de plaque, en ce que sur les côtés intérieurs des plaques (5, 8) dans le plan des étriers de retenue (4a, 4b) sont prévues des butées (10, 10') qui forment les guidages (12, 12') avec les saillies de retenue (9a—9d; 9a'—9d') limitrophes sur les deux côtés, en ce que la plaque d'appui du pneu (5) est reliée à la plaque de roulement (8) par l'intermédiaire d'au moins une âme (7) sensiblement perpendiculaire au plan de plaque, laquelle de préférence forme une partie des butées (10, 10') et en ce que le corps de base présente un tracé sensiblement carré.

2. Chaîne selon la revendication 1, caractérisée en ce que sur deux côtés opposés du corps de base (2) respectivement un étrier de retenue (4a, 4b) relie la plaque d'appui du pneumatique (5) avec la plaque de roulement (8).

3. Chaîne selon les revendications 1 et 2, caractérisée en ce que les saillies de retenue (9a—9d; 9a'—9d') sur les deux côtés des étriers de retenue (4a, 4b) pour respectivement un étrier de jonction sont conçues en tant que paires de saillie de retenue (9a—9a'; 9b—9b') ayant une forme identique sur les côtés intérieurs de plaques opposées, en ce que respectivement deux de ces paires de saillies de retenue forment sur un côté des étriers de retenue (4a, 4b) entre eux ou en juxtaposition l'un de l'autre des passages d'insertion (20) pour les tenons d'arrêt (17, 18, 17', 18') faisant saillie sensiblement perpendiculairement à partir du plan des étriers de jonction (3), et en ce que les tenons d'arrêt sont dimensionnés de manière à pouvoir être logés avec un certain jeu dans les guidages (12) après leur insertion.

4. Chaîne selon l'une des revendications 1 à 3, caractérisée en ce que les saillies de retenue sont conçues en tant qu'âmes (31) reliant la plaque d'appui du pneumatique avec la plaque de roulement, lesquelles forment à leur proximité des passages d'insertion (20') pour les tenons d'arrêt situés dans le plan des étriers de jonction (33), conçues de préférence en équerre (32). (Figure 21).

5. Chaîne selon l'une des revendications 1 à 4, caractérisée en ce que les étriers de jonction (3) du type à manille en forme de U sont minus sur une extrémité d'aile d'un tenon de blocage (19) s'étendant à l'état engagé essentiellement dans la direction de l'étrier de retenue limitrophe (4a, 4b), lequel tenon laisse un espace libre entre lui-même et la surface interne de l'étrier de retenue, permettant de recevoir l'âme de jonction (14) d'un étrier de jonction (3) accroché à cet endroit.

6. Chaîne selon la revendication 5, dans laquelle les tenons d'arrêt (17, 18, 17', 18') et les saillies de retenue (9a—9d; 9a'—-9d') sont dimensionnés de telle manière dans le sens parallèle aux étriers de retenue qu'en cas d'usure du tenon de blocage (19) et/ou de l'âme de jonction (14) limitrophe à celui-ci ou de l'étrier de retenue s'engageant dans celui-ci (4a, 4b) les tenons d'arrêt (17, 18, 17', 18') ne peuvent se libérer les guidages.

7. Chaîne selon l'une des revendications précédentes, caractérisée en ce que dans les corps de base, notamment sur les bords latéraux de la bande de roulement réticulaire, est respectivement agencé en étrier de jonction (40) muni d'un oeillet (46) pour le raccordement des bandes réticulaires latérales, dont le plan est tourné sensiblement à angles droits par rapport au plan de l'autre étrier de jonction.

8. Chaîne selon l'une des revendications 1 à 7, dans laquelle la plaque d'appui du pneumatique (5) et la plaque de roulement (8) présentent une configuration sensiblement carrée et les étriers de retenue (4a, 4b) se prolongent depuis le milieu des bords opposés.

9. Chaîne selon l'une des revendications 1 à 8, dans laquelle les rayons de courbure interne des étriers de retenue (4a, 4b) sont quelque peu inférieurs, de préférence, d'environ 20% inférieurs au rayon de courbure interne de l'étrier de jonction (3) ainsi qu'à son rayon transversal interne s'engrénant dans l'étrier de retenue.

10. Chaîne selon l'une des revendications 1 à 9, caractérisée en ce que les étriers de retenue et les étriers de jonction (3) présentent des surépaisseurs d'usure (13).

11. Chaîne selon l'une des revendications 1 à 10, dans laquelle au moins une partie des plaques de roulement (8) et/ou des plaques d'appui de pneumatique (5) présente un profilé (21, 21', 36, 37, 38, 39).

12. Chaîne selon la revendication 11, caractérisée en ce que le profil est formée par des corps profilés ayant une configuration en forme de V, rectangulaires, circulaires, et notamment d'étoiles à quatre branches.

13. Chaîne selon la revendication 12, caractérisée en ce que sur chaque plaque n'est formé qu'un seul corps profilé.

14. Chaîne selon l'une des revendications 11 à 13, caractérisée en ce que les plaques d'appui de pneumatique (5) sont munies de nopes (39) ou de bandes, consistant en une matière synthétique, de préférence du caoutchouc.

15. Chaîne selon l'une des revendications 12 à 14, caractérisée en ce que les corps profilés sont rapportés par forgeage sur les corps de base.

16. Chaîne selon l'une des revendications 12 à 14, caractérisée en ce que les corps de profilé de roulement (37', 38') prévus sur la plaque de roulement (8) sont reliés de façon amovible au corps de base. (2).

17. Chaîne selon la revendication 16, caractérisée en ce que les corps profilés de roulement (37', 38') consistent en des pièces d'acier matricé ou pour le moins en partie de pièces en matière synthétique résistants à l'usure.

18. Chaîne selon l'une des revendications 16 ou 17, caractérisée en ce qu'une ouverture centrale (63, 65) formée de préférence en tant qu'alésage est prévue dans le corps de base, dans laquelle est inséré un pivot de retenue (60) maintenu en position dans le corps profilé de roulement (37', 38').

19. Chaîne selon la revendication 18, caractérisée en ce que le pivot de retenue (60) présente une fente longitudinale (61) de préférence remplie de caoutchouc, et en ce que l'extrémité du pivot de retenue opposée au corps profilé de roulement est fixée au moyen d'une rondelle élastique (62) sur le corps de base.

20. Chaîne selon l'une des revendications 16 et 17, dans laquelle le corps profilé de roulement présente de préférence plusieurs corps profilés, caractérisée en ce que le corps profilé de marche (37') est fixé sur le corps de base au moyen d'une vis (66), qui traverse centralement le corps de base (2).

21. Chaîne selon l'une des revendications 11 à 20, caractérisée en ce que, pour la formation d'une chaîne réversible, tant la plaque d'appui de pneumatique (5) que la plaque de roulement (8) présentent sensiblement la même épaisseur de profilé, de préférence le même profil (35, 36).

22. Chaîne selon la revendication 11, dans laquelle le côté extérieur de la plaque d'appui de pneumatique (5) est muni de préférence de plusieurs renflements longitudinaux (6a, 6b) orientés transversalement par rapport au sens de roulement du pneu.

23. Chaîne selon l'une des revendications 11 à 22, caractérisée en ce que la longueur du corps de base présente un rapport de 2:1 par rapport à sa hauteur, le profilé y compris.

24. Chaîne selon la revendication 12, caractérisée en ce que le corps de base présente en projection horizontale les dimensions approximatives de 80×80 mm, et en ce que les rayons de courbure interne des étriers de jonction (3), dont le rayon transversal sur la partie d'engagement et le rayon transversal de la partie d'engagement de l'étrier de retenue sont d'environ 10 mm, tandis que le rayon de courbure interne de l'étrier de retenue est d'environ de 12 à 13 mm.

25. Chaîne selon l'une des revendications 23 ou 24, caractérisée en ce que les saillies de retenue ont une largeur de 10 mm dans le sens transversal par rapport au plan des étriers de retenue de même que les tenons d'arrêt (17, 18; 17', 18'), tandis que les guidages (12) pour les tenons d'arrêt ont une largeur d'environ 11 mm, et en ce que les saillies de retenue (9a—9d; 9a'—9d') se situent à une distance d'environ 9 mm par rapport au bord de la plaque limitrophe respective.

26. Chaîne selon l'une des revendications 1 à 25, dans laquelle les corps de base (2) peuvent pivoter dans les deux directions d'au moins environ 30°, de préférence d'environ 45°; dans le plan formé par ceux-ci par rapport à l'axe médian longitudinal d'un corps de base limitrophe.

27. Chaîne selon l'une des revendications 1 à 26, dans laquelle les corps de base peuvent pivoter dans les deux sens d'au moins environ 20°, de préférence d'environ 30°; perpendiculairement au plan formé par ceux-ci par rapport à l'axe médian longitudinal d'un corps de base limitrophe.

28. Chaîne selon l'une des revendications 1 à 27, dans laquelle les corps de base sont assemblés pour former un ensemble réticulaire ou en treillis, dans lequel les mailles sont munies de quatre, six ou trois et six, ainsi que huit ou quatre et huit corps de base.

29. Chaîne selon l'une des revendications 1 à 28, laquelle sans élément supplémentaire est bouclée en une chaîne sans fin, caractérisée en ce que—en partant du bord de la chaîne—un étrier de jonction (3) faisant partie d'un corps de base de l'extrémité de chaîne est accroché dans l'étrier de retenue (4) d'un corps de base correspondant (2) du début de la chaîne, et l'étrier de jonction faisant partie du dernier corps de base est accroché dans l'étrier de retenue du premier corps de base.

**Claims**

1. A tyre and skid protection chain for rubber-tyred vehicles, more particularly heavy fast earth-moving machinery, the chain having substantially uniform, preferably unitary and seamless, basic members (2, 2') which engage with the tyre surface by way of a tyre plate (5) and which each have outside the same a running plate (8) disposed at a distance from and substantially parallel to the tyre plate (5), outwardly bent eye-like or loop-like retaining stirrups (4a, 4b) extending from the tyre plate (5) to the running plate (8), the stirrups (4) each being engaged by shackle-like connecting stirrups (3, 3', 3'') connected to adjacent basic members (2, 2'), the insides of the tyre plate (5) and running plate (8) having on them in the gap (11) between them retaining projections (9a—9d) which extend towards one another and behind which catch projections (17, 18; 17', 18') engage, the catch projections (17, 18; 17', 18') being disposed on the arm ends of the connecting stirrups (3, 3', 3''), the same and the retaining projections (9a—9d) being so devised that the stirrups are disposed in a plane substantially perpendicular to the plane of the retaining stirrups (4a, 4b) and the longitudinal axis of the connecting stirrups is substantially at right-angles to the longitudinal axis of the retaining stirrups, characterised in that the retaining projections (9a—9d) are so disposed as to be substantially parallel to the retaining stirrups (4a, 4b) and are offset externally therefrom in order to form between themselves or in each plate inside guides (12, 12') which extend substantially parallel to the retaining stirrups (4a, 4b) and which are operative to guide the catch projections (17, 18; 17', 18') at the ends of the connecting stirrups (3); abutments (10, 10') on the insides of the plates (5, 8) in the plane of the retaining stirrups (3); abutments (10, 10') on the insides of the plates (5, 8) in the plane of the retaining stirrups (4a, 4b) co-operate with the adjacent retaining projections (9a—9d); (9a'—9d') on both sides to form the guides (12, 12'); the tyre plate (5) is connected to the running plate (8) by way of at least one web (7) disposed substantially perpendicularly to the plane of the plates and preferably forming a part of the abutment (10, 10'); and the basic member is in plan substantially square.

2. A chain according to claim 1, characterised in that a retaining stirrup (4a, 4b) on each of the two opposite sides of the basic member (2) connects the tyre plate (5) to the running plate (8).

3. A chain according to claims 1 and 2, characterised in that the retaining projections (9a—9d; 9a'—9d') on both sides of the retaining stirrups (4a, 4b) for any single connecting stirrup take the form of retaining-projection pairs (9a, 9a'; 9b, 9b' . . .) of the same shape on the opposite insides of the plates; two of these pairs on one side of the retaining stirrups (4a, 4b) form between themselves or adjacent one another entry passages (20) for the catch projections (17, 18; 17', 18') which project substantially perpendicularly from the plane of the connecting stirrups (3); and the catch projections engage in the guides (12) with clearance after insertion.

4. A chain according to any of claims 1—3, characterised in that the retaining projections are in the form of webs (31) which connect the tyre plate to the running plate and which form adjacent one another entry passages (20') for the catch projections which are disposed in the plane of the connecting stirrups (33) and which are preferably in the form of angle-hooks (32) (Figure 21).

5. A chain according to any of claims 1—4, characterised in that the shackle-like U-shaped connecting stirrups (3) have at one end a locking projection (19) which in the introduced state extends substantially towards the adjacent retaining stirrup (4a, 4b) and which leaves between itself and the inside surface of the retaining stirrup a gap adapted to receive the connecting web (14) of a connecting stirrup (3) hooked in this zone.

6. A chain according to claim 5, wherein the catch projections (17, 18; 17', 18') and retaining projections (9a—9d; 9a'—9d') are so dimensioned in a direction parallel to the retaining stirrups as to prevent catch projections (17, 18; 17', 18') from disengaging from the guides in the event of wear of the catch projection (19) and/or the connecting web (14) adjacent the same or of the retaining stirrup (4a, 4b) engaging the latter web.

7. A chain according to any of the preceding claims, characterised in that a connecting stirrup (40) having an eye or lug or the like (46) is disposed in the base members, more particularly on the side edges of the running network for the connection of the side networks, the plane of the stirrup (40) being offset by approximately a right-angle from the plane of the other connecting stirrup.

8. A chain according to any of claims 1—7, in which the tyre plate (5) and the running plate (8) are in plan substantially square and the retaining stirrups (4a, 4b) extend from the centre of opposite edges.

9. A chain according to any of claims 1—11 in which the inner radii of curvature of the retaining stirrup (4a, 4b) is less, preferably by about 20%, than the inner radius of curvature of the connecting stirrup (3) and of its inner cross-sectional radius engaging the retaining stirrup.

10. A chain according to any of claims 1 to 12, characterised in that the retaining stirrups and the connecting stirrups (3) have thickened wearing parts (13).

11. A chain according to any of claims 1—13, in which at least some of the running plates (8) and/or tyre plates (5) have a profile (21, 21', 36, 37, 38, 39).

12. A chain according to claim 14, characterised in that the profile is embodied by profiled members which are in plan V-shaped or rectangular and more particularly in the form of a four-pointed star.

13. A chain according to claim 15, characterised in that merely a single profiled member is formed on each plate.

14. A chain according to any of claims 14—16, characterised in that the tyre plates (5) have plastics, preferably rubber, protuberances (29) or strips.

15. A chain according to any of claims 15—17, characterised in that the profiled members are forged on the basic members.

16. A chain according to any of claims 12 to 14, characterised in that the profiled members 37', 38' on the running plate (8) are releasably connected to the basic member (2).

17. A chain according to claim 16, characterised in that the profiled members (37', 38') are embodied by drop forged steel parts or, at least to some extent, by wear-resistant plastics parts.

18. A chain according to claim 16 or 17, characterised in that the basic member is formed with a central aperture (63, 65) which is preferably in the form of a bore and into which a retaining pin (60) secured to the profiled member (37', 38') associated with the running plate is introduced.

19. A chain according to claim 20, characterised in that the retaining pin (60) has a preferably rubber-filled longitudinal slot (61) and the retaining-pin end remote from the profiled member of the running plate is located on the basic member by means of a circlip (62).

20. A chain according to claim 16 or 17 wherein the profiled member of the running plate preferably comprises a member of profiled members, characterised in that the profiled section member (37') is secured by means of a screw (66) which extends centrally through the basic member (2).

21. A chain according to any of claims 11 to 20, characterised in that to form a reversible chain both the tyre plate (5) and the running plate (8) have substantially the same profile thickness, preferably the same profile (35, 36).

22. A chain according to claim 11, wherein the outside of the tyre plate (5) has preferably a number of longitudinal beads (6a, 6b) disposed transversely of the direction of tyre running.

23. A chain according to any of claims 11 to 22, characterised in that the length of the basic member is in the proportion of 2 to 1 to the height of such member including the profile.

24. A chain according to claim 12, characterised in that the basic member in plan measures approximately 80×80 mm and the inner radii of curvature of the connecting stirrups (3), their cross-sectional radius at the engaging part and the cross-sectional radius of the engaging part of the retaining stirrups are approximately 10 mm, the inner radius of curvature of the retaining stirrup being approximately 12—13 mm.

25. A chain according to claim 23 or 24, characterised in that the retaining projections, like the catch projections (17, 18; 17', 18') are 10 mm wide transversely of the plane of the retaining stirrups, the guides (12) for the catch projections being approximately 11 mm wide, and the retaining projections (9a—9d; 9a'—9d') being at a distance of approximately 9 mm from the adjacent plate edge.

26. A chain according to any of claims 1 to 25, wherein the basic members (2) are pivotable through at least approximately 30°, preferably approximately 45°, in both directions in the plane they form, referred to the longitudinal central axis of an adjacent basic member.

27. A chain according to any of claims 1 to 26, wherein the basic members are pivotable through at least approximately 20°, preferably approximately 30°, in both directions perpendicularly to the plane they form, referred to the longitudinal central axis of an adjacent basic member.

28. A chain according to any of claims 1 to 27, wherein the basic members are combined to form a compound network in which loops having four, six or three and six and eight or four and eight basic members are provided.

29. A chain according to any of claims 1 to 28 closed without additional elements to form an end chain wherein, starting from the chain edge, a connecting stirrup (3) associated with a basic member of the chain end is hooked into the retaining stirrup (4) of a corresponding basic member (2) of the chain start and the connecting stirrup associated with the last-mentioned basic member is hooked into the retaining stirrup of the previously mentioned basic member.

Fig. 1

Fig. 2

Fig. 3

*Fig. 3*

Fig. 4

Fig. 5

Fig. 6

Fig. 7

Fig. 8

Fig. 9

Fig. 10

Fig. 11

Fig. 12

7

0 084 579

Fig. 13

Fig. 14

Fig. 15

Fig. 26

3″

30

31

2′

20′

7′

31

3″

Fig. 16

Fig. 17

Fig. 18

Fig. 19

0 084 579

Fig. 20

Fig. 21

*Fig.22*

*Fig. 23*

14

Fig. 24

Fig. 25

*Fig. 27*

*Fig. 28*

Fig. 29

Fig. 30

*Fig. 31*

*Fig. 32*

Fig. 33

5

39

Fig. 34

8

5

39

38'

2

5 63 60 61 62

*Fig. 35*

38'

*Fig. 36*

37¹

2

65    66

*Fig. 37*

*Fig. 38*

Fig. 39          Fig. 40

40

46

42

43

40

41          42

44          45

43

Fig. 41